# EUROPEAN PATENT APPLICATION

(11) **EP 4 794 335 A1**
(43) Date of publication of application: **19.08.2026**
(21) Application number: 24876916.8
(22) Date of filing: 22.07.2024
(51) Int. Cl.: H04N 19/597, G06T 9/00

(54) **IMAGE PROCESSING DEVICE AND METHOD**

(30) Priority: 12.10.2023 US 202363543795 P
(71) Applicant: Sony Group Corporation, Tokyo 108-0075 (JP)
(72) Inventor: MIYAGI Yusuke, Tokyo 108-0075 (JP); SAKURAI Hironari, Tokyo 108-0075 (JP); TSUKUBA Takeshi, Tokyo 108-0075 (JP); YAGASAKI Yoichi, Tokyo 108-0075 (JP)
(74) Representative: D Young & Co LLP
(86) International application number: PCT/JP2024/026066
(87) International publication number: WO 2025/079315

(57) **Abstract**

The present disclosure relates to an image processing device and a method, and more particularly, to an image processing device and a method capable of suppressing reduction in quality of an image obtained by rendering 3D data including a plurality of layer images. Generation of inter-layer relative information regarding a relative relationship between layers of 3D data including a layer image of a color component and a layer image of an alpha component, and generation of a bitstream by encoding the 3D data and addition of the inter-layer relative information to the bitstream are executed. In addition, generation of 3D data by decoding the bitstream, analysis of inter-layer relative information extracted from the bitstream, and rendering of 3D data based on the inter-layer relative information and generation of a viewpoint image viewed from any viewpoint are executed. The present disclosure can be applied to, for example, an image processing device, an electronic apparatus, an image processing method, or a program.

## Description

### Technical Field

The present disclosure relates to an image processing device and a method, and more particularly, to an image processing device and a method capable of suppressing reduction in quality of an image obtained by rendering 3D data including a plurality of layer images.

### Background Art

In the related art, as a method of expressing a three-dimensional shape of an object, there has been NeRF (Representing Scenes as Neural Radiance Fields for View Synthesis) in which a radiance field corresponding to a space including an object is generated and the radiance field is approximated by a neural network (see NPL 1 to NPL 3, for example). NeRF expresses spatial information of a 3D object by MLP (Multi Layer Perceptron).

In addition, there has been a method called MPI (Multi Plane Image) in which a three-dimensional space is divided into a plurality of layers (2D images) and expressed. In order to speed up rendering processing of NeRF, a method called NeX in which MLP is converted into the MPI and handled has been considered (see, for example, NPL 4). The MPI is an image group in which a plurality of 2D images are allocated in a layer shape, and 3D data can be handled as a 2D image.

In addition, a method of extending the specification of the MPI by using SEI (Supplemental Enhancement Information) for a bitstream obtained by encoding the MPI has been proposed (see NPL 5, for example).

### Citation List

### Non Patent Literature

NPL 1: Ben Mildenhall, Pratul P. Srinivasan, Matthew Tancik, Jonathan T. Barron, Ravi Ramamoorthi, Ren Ng, "NeRF: Representing scenes as neural radiance fields for view synthesis", ECCV 2020, 2020/3/19
NPL 2: Thomas Muller, Alex Evans, Christoph Schied, Alexander Keller, "Instant neural graphics primitives with a multiresolution hash encoding", arXiv preprint arXiv: 2201.05989, 2022/1/16
NPL 3: Ricardo Martin-Brualla, Noha Radwan, Mehdi S.M. Sajjadi, Jonathan T. Barron, Alexey Dosovitskiy, Daniel Duckworth, "NeRF in the Wild: Neural Radiance Fields for Unconstrained Photo Collections", https://arxiv.org/abs/2008.02268, 2020/8/5
NPL 4: Suttisak Wizadwongsa, Pakkapon Phongthawee, Jiraphon Yenphraphai, "NeX: Real-time View Synthesis with Neural Basis Expansion", arXiv: 2103.05606v2[cs.CV]12 Apr 2021
NPL 5: Taoran Lu, Peng Yin, Guan-Ming Su, Dae Yeol Lee, Tsung-wei Huang, Sean McCarthy, Walt Husak, Gary J. Sullivan: AHG9: Multiplane Image Information SEI, JVET-AE0066-v5, version 5, 2023-07-15

### Summary

### Technical Problem

However, even if the extension by the method described in NPL 5 is applied, there is a concern that the quality of an image obtained by rendering 3D data is reduced due to a constraint on the characteristics of the MPI layer.

The present disclosure has been made in view of such a situation, and an object thereof is to enable suppression of reduction in quality of an image obtained by rendering 3D data including a plurality of layer images.

### Solution to Problem

According to an aspect of the present technique, an image processing device includes: an inter-layer relative information generation unit that generates inter-layer relative information regarding a relative relationship between layers of 3D data including a layer image of a color component and a layer image of an alpha component; and an encoding unit that generates a bitstream by encoding the 3D data, and adds the inter-layer relative information to the bitstream.

According to an aspect of the present technique, an image processing method includes: generating inter-layer relative information regarding a relative relationship between layers of 3D data including a layer image of a color component and a layer image of an alpha component; and generating a bitstream by encoding the 3D data, and adding the inter-layer relative information to the bitstream.

According to still another aspect of the present technique, an image processing device includes: a decoding unit that decodes a bitstream and generates 3D data including a layer image of a color component and a layer image of an alpha component; an inter-layer relative information analysis unit that analyzes inter-layer relative information regarding a relative relationship between layers of the 3D data extracted from the bitstream; and a viewpoint image generation unit that renders the 3D data based on the inter-layer relative information and generates a viewpoint image viewed from any viewpoint.

According to still yet another aspect of the present technique, an image processing method includes: decoding a bitstream and generating 3D data including a layer image of a color component and a layer image of an alpha component; analyzing inter-layer relative information regarding a relative relationship between layers of the 3D data extracted from the bitstream; and rendering the 3D data based on the inter-layer relative information and generating a viewpoint image viewed from any viewpoint.

In the image processing device and the method according to an aspect of the present technique, generation of inter-layer relative information regarding a relative relationship between layers of 3D data including a layer image of a color component and a layer image of an alpha component; generation of a bitstream by encoding the 3D data; and addition of the inter-layer relative information to the bitstream are performed.

In the image processing device and the method according to the other aspects of the present technique, decoding of a bitstream and generation of 3D data including a layer image of a color component and a layer image of an alpha component; analysis of inter-layer relative information regarding a relative relationship between layers of the 3D data extracted from the bitstream; and rendering of the 3D data based on the inter-layer relative information and generation of a viewpoint image viewed from any viewpoint are performed.

### Brief Description of Drawings

[Fig. 1] Fig. 1 is a diagram for describing 3D data using an MPI.
[Fig. 2] Fig. 2 is a diagram for describing 3D data using an MPI.
[Fig. 3] Fig. 3 is a diagram for describing NeX.
[Fig. 4] Fig. 4 is a diagram for describing NeX.
[Fig. 5] Fig. 5 is a diagram for describing NeX.
[Fig. 6] Fig. 6 is a diagram for describing NeX.
[Fig. 7] Fig. 7 is a diagram illustrating an example of a method of extending a relative relationship between layers.
[Fig. 8] Fig. 8 is a diagram illustrating an example of syntax.
[Fig. 9] Fig. 9 is a diagram for describing a packing method of a layer image.
[Fig. 10] Fig. 10 is a diagram for describing the packing method of a layer image.
[Fig. 11] Fig. 11 is a diagram for describing extension of a ratio of the numbers of layers between a color component layer and an alpha component layer.
[Fig. 12] Fig. 12 is a diagram for describing extension of the resolution ratio between the layer of the color component and the layer of the alpha component.
[Fig. 13] Fig. 13 is a diagram for describing extension of a ratio of the numbers of layers and a ratio of resolutions between the color component layer and the alpha component layer.
[Fig. 14] Fig. 14 is a diagram for describing extension of the ratio of the numbers of layers and the ratio of resolutions between the color component layer and the alpha component layer.
[Fig. 15] Fig. 15 is a diagram illustrating an example of a method of extending layer allocation.
[Fig. 16] Fig. 16 is a diagram illustrating an example of an additional layer.
[Fig. 17] Fig. 17 is a diagram illustrating an example of a non-equal interval allocation function.
[Fig. 18] Fig. 18 is a diagram illustrating an example of control information regarding layer allocation.
[Fig. 19] Fig. 19 is a diagram illustrating an example of a method of extending a layer shape.
[Fig. 20] Fig. 20 is a diagram illustrating an example of a layer shape.
[Fig. 21] Fig. 21 is a diagram illustrating an example of control information regarding a layer shape.
[Fig. 22] Fig. 22 is a diagram illustrating another example of the control information regarding the layer shape.
[Fig. 23] Fig. 23 is a block diagram illustrating an example of the main configuration of an encoding device.
[Fig. 24] Fig. 24 is a flowchart for describing an example of a flow of encoding processing.
[Fig. 25] Fig. 25 is a block diagram illustrating an example of the main configuration of a decoding device.
[Fig. 26] Fig. 26 is a flowchart for describing an example of a flow of decoding processing.
[Fig. 27] Fig. 27 is a block diagram illustrating an example of the main configuration of a computer.

### Description of Embodiments

Hereinafter, modes for carrying out the present disclosure (hereinafter, referred to as "embodiments") will be described. Note that the descriptions will be given in the following order.
1. Literature Supporting Technique Content, Technical Terms, and Like
2. 3D Data Using MPI
3. Extension Regarding Layer
4. First Embodiment (Encoding Device)
5. Second Embodiment (Decoding Device)
6. Supplementary Notes

### <1. Literature Supporting Technique Content, Technical Terms, and Like>

The scope disclosed in the present technique includes not only the content described in the embodiments but also the content described in the following NPL and the like known at the time of filing, the content of other documents referred to in the following NPL, and the like.

NPL 1: (described above)
NPL 2: (described above)
NPL 3: (described above)
NPL 4: (described above)
NPL 5: (described above)

That is, the contents described in the above-described NPLs as well as the content of other literature referred to in the above-described NPLs also serve as a basis for determining whether the support requirement is met.

### <2. 3D Data Using MPI>

### <NeRF>

In the related art, as a method of expressing a three-dimensional shape of an object, there has been NeRF (Representing Scenes as Neural Radiance Fields for View Synthesis) in which a radiance field corresponding to a space including an object is generated, and the radiance field is approximated with a neural network, as described in NPL 1 to NPL 3.

The radiance field expresses a scene in a space including an object by a color in each direction at each position in the space and opacity at each position in the space. Here, the opacity is an index indicating that some object exists therein, and can also be considered to be density. That is, the shape of a three-dimensional space can be expressed by obtaining a radiance field in which the density of the coordinates where objects exist is high. NeRF approximates such a radiance field with a neural network. That is, NeRF is a technique of generating a radiance field corresponding to a 3D object, approximating the radiance field with a neural network, and performing rendering by using the neural network.

In NeRF, an object in a three-dimensional space is picked up from different positions, a camera pose of an obtained picked-up image is obtained, and learning of a neural network is performed by using the picked-up image and the camera pose, thereby generating a neural network (MLP (Multi Layer Perceptron)) that approximates a radiance field representing a three-dimensional shape of the object. At the time of inference, by inputting pose information of a desired new viewpoint to the neural network, a rendering image of the new viewpoint is obtained. In the present specification, such pose information of a certain viewpoint (any viewpoint) is also referred to as viewpoint information. Furthermore, a rendering image of a certain viewpoint (any viewpoint) is also referred to as a viewpoint image.

### <NeX>

In addition, there has been a method called MPI (Multi Plane Image) in which a three-dimensional space is divided into a plurality of layer images (2D images) and expressed. In NPL 4, in order to speed up rendering processing of NeRF, a method called NeX, in which MLP is converted into the MPI and handled, has been proposed. The MPI is an image group in which a plurality of 2D images are allocated in a layer shape, and 3D data can be handled as a 2D image.

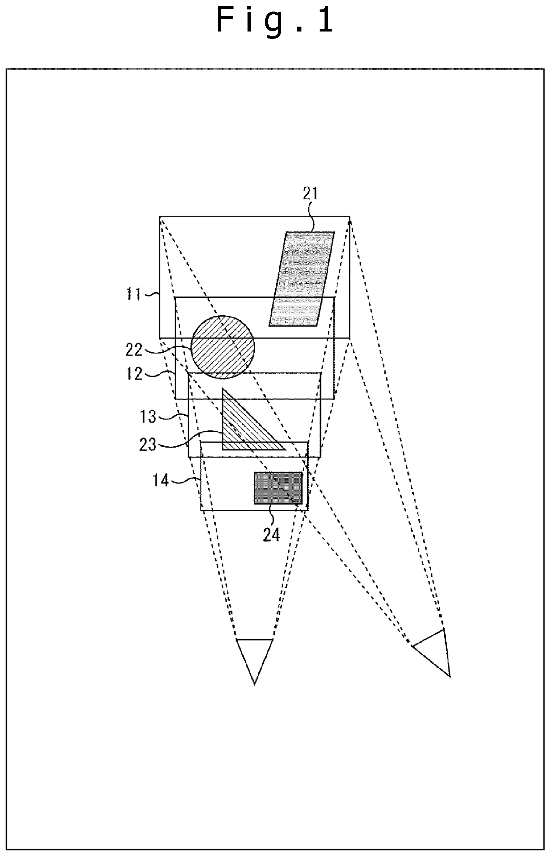

In the MPI, for example, like layers 11 to 14 in Fig. 1, a plurality of layers (2D planes) are formed in a three-dimensional space, and an object is expressed for each layer. Each layer is 2D data representing a 2D planar distribution of predetermined information, and thus can also be considered to be an image. In the present specification, this layer is also referred to as a layer image. The MPI includes a plurality of RGBA images. The RGBA image indicates a combination of an image of a color component (RGB) and an image of an alpha component (Alfa). The alpha component is a component indicating the existence of an object. The alpha component may represent whether or not an object exists by the values "0" and "1", or may represent the probability that the object exists (or the probability that the object does not exist). In other words, the alpha component can also be considered to be transmittance. The RGBA image is generated by learning a multi-viewpoint image using, for example, a DNN (Deep Neural Network). That is, the MPI is 3D data including a layer image of the color component and a layer image of the alpha component.

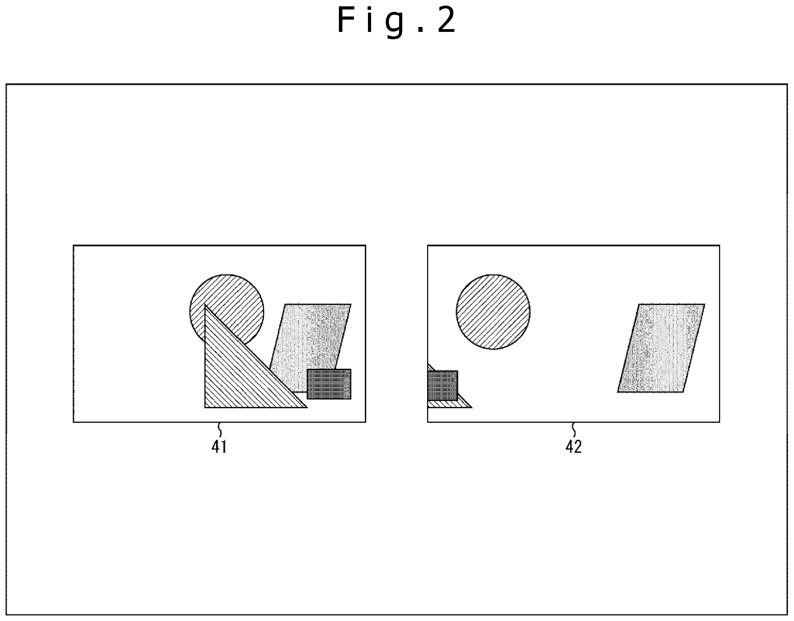

In a viewpoint image (rendering image of the designated viewpoint), the composition result (superimposition result) of objects of the respective layers viewed from the viewpoint is shown. For example, as illustrated in Fig. 1, it is assumed that an object 21 exists in the layer 11, an object 22 exists in the layer 12, an object 23 exists in the layer 13, and an object 24 exists in the layer 14. In the rendering image, these objects are superimposed in a positional relationship when viewed from a viewpoint position. A rendering image 41 in Fig. 2 shows an example of a rendering image of a viewpoint 31 in Fig. 1, and a rendering image 42 shows a rendering image of a viewpoint 32 in Fig. 1. By changing the overlapping manner of each object from the object 21 to the object 24 according to the viewpoint position as described above, the stereoscopic effect of a three-dimensional space (three-dimensional shape of an object) is expressed.

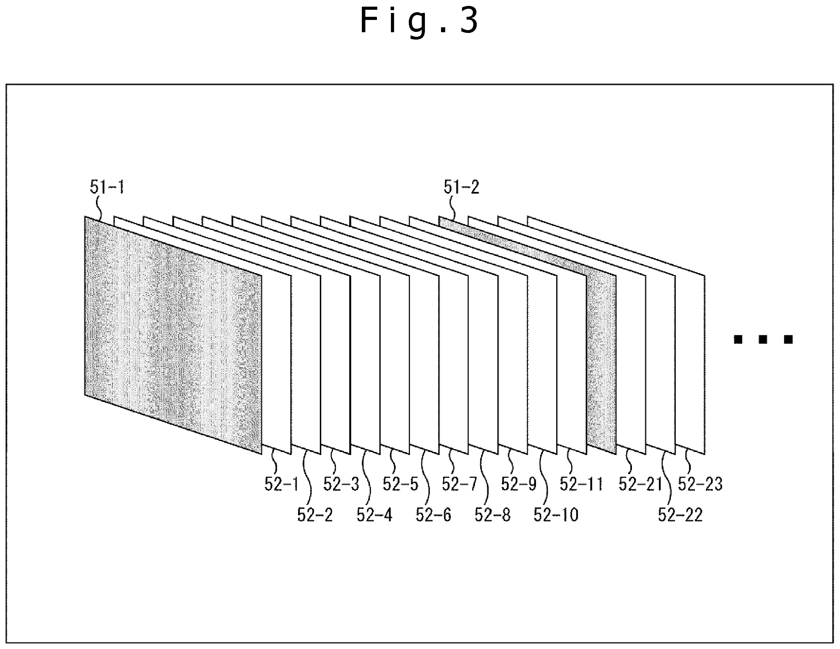

In NeX, MLP of NeRF is converted into such an MPI (also referred to as a NeX MPI) and handled. That is, a three-dimensional space is expressed by a plurality of layers. Fig. 3 illustrates an example of a layer configuration of NeX. In the case of a NeX MPI, a plurality of main layers 51 being a main layer 51-1, a main layer 51-2, ... are formed, and further a plurality of sublayers 52 being a sublayer 52-1 to a sublayer 52-11, a sublayer 52-21, ... are formed between the main layers 51. That is, in a layer group expressing the three-dimensional space, some layers at a predetermined number of intervals are formed as the main layers 51, and the remaining layers therebetween are formed as the sublayers 52.

The number of layers of the layer group, the number of main layers, and the number of sublayers between the main layers are all freely set. For example, a three-dimensional space (1 scene) at a certain time may be expressed by 192 layers, and 1 layer in 12 layers (that is, a total of 16 layers) may be set as the main layer and the remaining 176 layers may be set as the sublayers. In this case, 1 layer in 12 successive layers in the layer group is the main layer, and the remaining 11 layers are the sublayers. Further, for example, the number of main layers may be set to 32. In this case, the number of layers of the layer group expressing one scene is 384. Of course, the present embodiment is not limited to these examples.

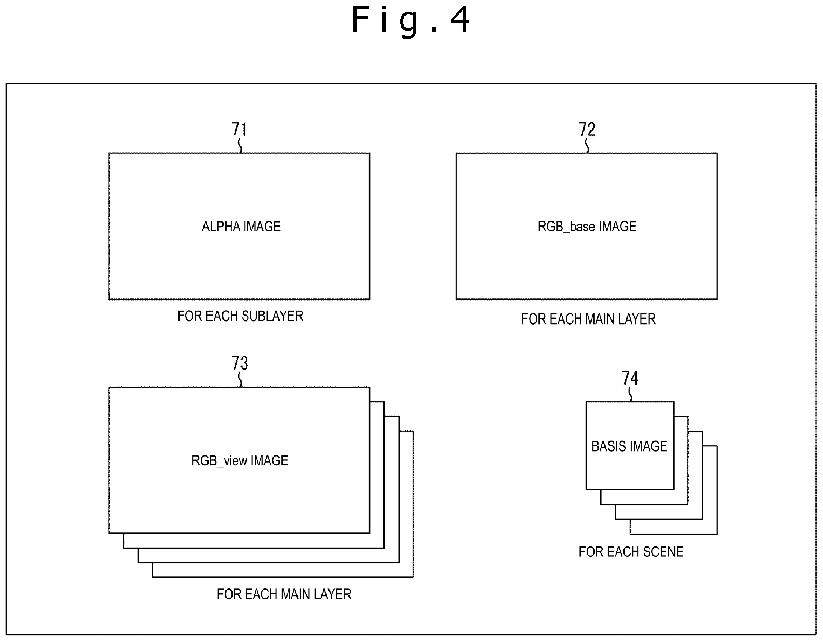

In the case of NeX, as illustrated in Fig. 4, data includes an alpha image 71, an RGB_base image 72, an RGB_view image 73, and a basis image 74. The alpha image 71 is distribution information of an alpha component indicating the existence of an object in a single layer in a layer group representing a three-dimensional space. That is, the alpha image 71 indicates where the object exists in the layer. Note that the alpha image 71 may indicate the probability that the object exists. Furthermore, the alpha image 71 may indicate where no object exists in the layer, and may indicate the probability that the object does not exist. In other words, the alpha image 71 may indicate the transmittance of each position in the layer. The alpha image 71 is generated for each sublayer. That is, the alpha image 71 is generated for each of all the layers (the main layer 51 and the sublayer 52 in Fig. 3) of the layer group expressing the three-dimensional space.

The RGB_base image 72 and the RGB_view image 73 are information indicating the distribution of RGB components indicating color information of an object in a plurality of successive layers in a layer group. Note that the RGB_base image and the RGB_view image are also collectively referred to as RGB images.

The RGB_base image 72 is color distribution information that does not depend on the angle of the viewpoint. The RGB_base image 72 includes a single image. In other words, the RGB_base image 72 is color distribution information having a strong color component when viewed from the front of the image.

The RGB_view image 73 is color distribution information that depends on the angle of the viewpoint. The RGB_view image 73 includes a plurality of images. The plurality of images are color distribution information having strong color components when viewed from different viewpoints. For example, the RGB_view image 73 includes four images of an image k0 having a strong color component when viewed from above, an image having a strong color component when viewed from below, an image having a strong color component when viewed from the left side, and an image having a strong color component when viewed from the right side.

The RGB_base image 72 and the RGB_view image 73 are generated for each main layer, that is, for each of a plurality of successive layers in the layer group. For example, in the case of Fig. 3, the RGB_base image 72 and the RGB_view image 73 are generated one by one for the main layer 51-1 and the sublayers 52-1 to 52-11. That is, the RGB_base image 72 indicates color distribution information for 12 successive layers, and is generated one by one for 12 layers. Similarly, the RGB_view image 73 indicates color distribution information for 12 successive layers, and four images are generated for each of the 12 layers.

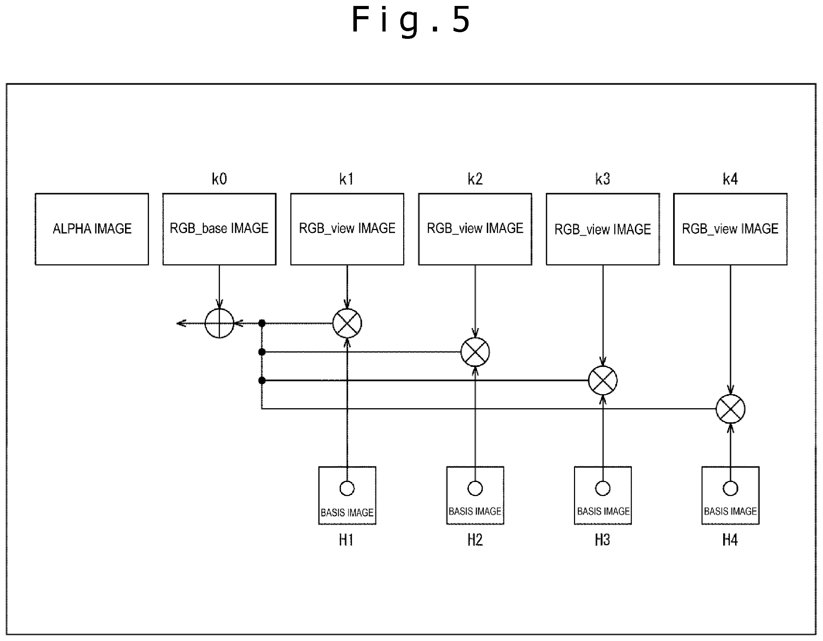

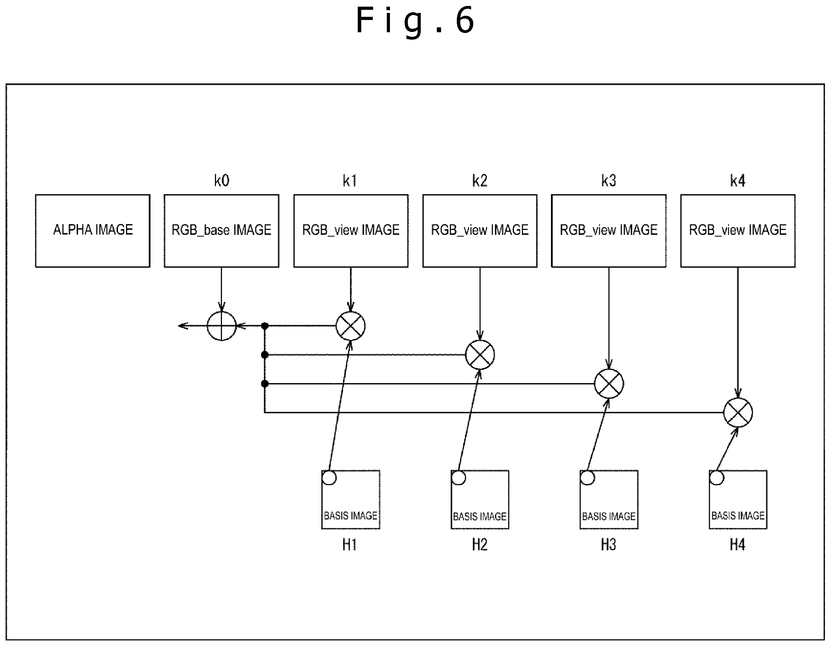

The basis image 74 includes the same number of images as the RGB_view image 73. For example, in a case where four RGB_view images 73 are formed as described above, four basis images 74 are also formed. The respective basis images 74 correspond to RGB_view images 73 different from each other, and the basis image 74 indicates the blend ratio of the corresponding RGB_view image 73 for each viewpoint direction. That is, the pixel position of the basis image 74 is determined according to the direction of the viewpoint, and the RGB_view image 73 corresponding to the basis image 74 is blended with the blend ratio indicated as the pixel value. For example, in a case where the viewpoint is the front, as illustrated in Fig. 5, each of the RGB_view images 73 (k1 to k4) is multiplied by a blend ratio indicated as a central pixel value of the corresponding basis image 74 (H1 to H4), and a result of the multiplication and the RGB_base image 72 (k0) are added. In addition, in a case where the viewpoint is the upper left, as illustrated in Fig. 6, each of the RGB_view images 73 (k1 to k4) is multiplied by a blend ratio indicated as a upper left pixel value of the corresponding basis image 74 (H1 to H4), and a result of the multiplication and the RGB_base image 72 (k0) are added.

In the NeX MPI, the expressive power can be improved by changing the RGB portion according to the viewpoint direction, as described above. Note that, by setting the alpha image for each sublayer and setting the RGB image for each main layer, it is possible to suppress an increase in the amount of data while increasing the expressive power and to realize improvement in the efficiency of learning.

### <Constraint on Extension of MPI and Layer Characteristics>

In addition, in NPL 5, a method of extending the specification of the MPI by using SEI (Supplemental Enhancement Information) for a bitstream obtained by encoding the MPI has been disclosed.

However, even though the extension by the method described in NPL 5 is applied, there is a constraint on the characteristics of the layer of the MPI. For example, there are constraints on the allocation, number, resolution, shape, and the like of the layer. Due to such constraints, there is a concern that the quality of an image obtained by rendering 3D data is reduced. For example, there is a concern that the image quality and resolution of the rendering image are reduced.

### <3. Extension Regarding Layer>

### <Method 1>

For example, regarding the 3D data including the layer image of the color component and the layer image of the alpha component as described above, the relative relationship between the layers is fixed. That is, a decoder needs to ascertain the relative relationship between the layers, and there is a constraint that it is difficult to optimize the relative relationship according to the content or the like, for example. Therefore, there is a concern that the quality of the rendering image is reduced.

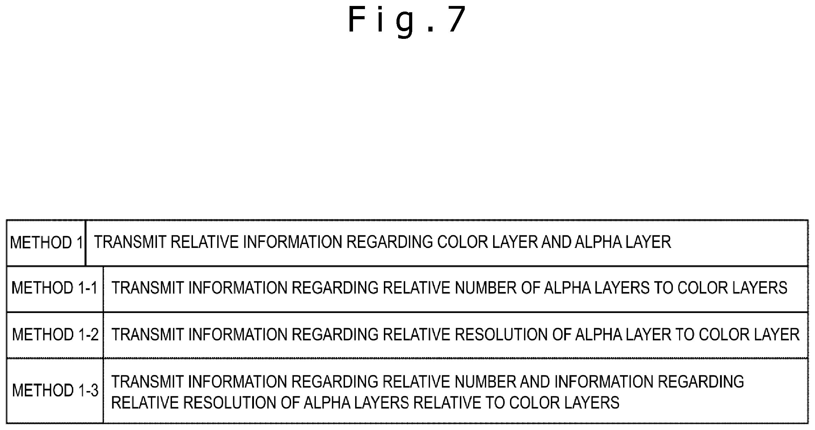

Therefore, in order to suppress reduction in the quality of the rendering image due to such a constraint, relative information regarding the color layer and the alpha layer is transmitted as illustrated in the uppermost part of the table in Fig. 7 (Method 1). In the present specification, the layer of the color component is also referred to as a color layer. Furthermore, the layer of the alpha component is also referred to as an alpha layer.

For example, a first image processing device is configured to include an inter-layer relative information generation unit that generates inter-layer relative information regarding a relative relationship between layers of 3D data including a layer image of a color component and a layer image of an alpha component, and an encoding unit that generates a bitstream by encoding the 3D data, and adds the inter-layer relative information to the bitstream. For example, a first image processing method is configured to include generating inter-layer relative information regarding a relative relationship between layers of 3D data including a layer image of a color component and a layer image of an alpha component, by the first image processing device, and generating a bitstream by encoding the 3D data and adding the inter-layer relative information to the bitstream, by the first image processing device. For example, a first program is configured to cause the first image processing device to execute generating inter-layer relative information regarding a relative relationship between layers of 3D data including a layer image of a color component and a layer image of an alpha component, and generating a bitstream by encoding the 3D data and adding the inter-layer relative information to the bitstream.

For example, a second image processing device is configured to include a decoding unit that decodes a bitstream and generates 3D data including a layer image of a color component and a layer image of an alpha component, an inter-layer relative information analysis unit that analyzes inter-layer relative information regarding a relative relationship between layers of the 3D data extracted from the bitstream, and a viewpoint image generation unit that renders the 3D data based on the inter-layer relative information and generates a viewpoint image viewed from any viewpoint. For example, a second image processing method is configured to include decoding a bitstream and generating 3D data including a layer image of a color component and a layer image of an alpha component, by the second image processing device, analyzing inter-layer relative information regarding a relative relationship between layers of the 3D data extracted from the bitstream, by the second image processing device, and rendering the 3D data based on the inter-layer relative information and generating a viewpoint image viewed from any viewpoint, by the second image processing device. For example, a second program is configured to cause the second image processing device to execute decoding a bitstream and generating 3D data including a layer image of a color component and a layer image of an alpha component, analyzing inter-layer relative information regarding a relative relationship between layers of the 3D data extracted from the bitstream, and rendering the 3D data based on the inter-layer relative information and generating a viewpoint image viewed from any viewpoint.

This inter-layer relative information may be added to the bitstream by any method. For example, the inter-layer relative information may be stored in SEI added to the bitstream of the 3D data. Of course, other methods may be applied.

By transmitting the inter-layer relative information from the encoding side to the decoding side as described above, for example, even though the relative relationship between the layers is optimized according to the content or the like, the decoder can easily recognize the relative relationship based on the inter-layer relative information. Therefore, it is possible to suppress reduction in the quality of the rendering image.

### <Method 1-1>

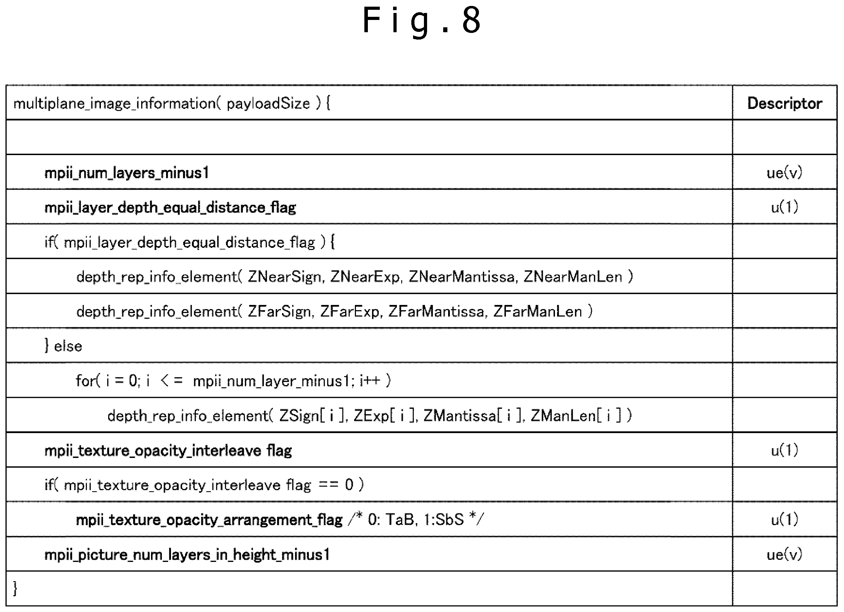

For example, in the method described in NPL 5, the specification of an MPI is expanded by adding SEI of syntax as illustrated in Fig. 8 to the bitstream. As shown in this syntax, information for setting a relationship between the number of layers of the color layer and the number of layers of the alpha layer is not transmitted in this SEI. That is, the relationship between the number of layers of the color layer and the number of layers of the alpha layer is fixed (for example, one to one).

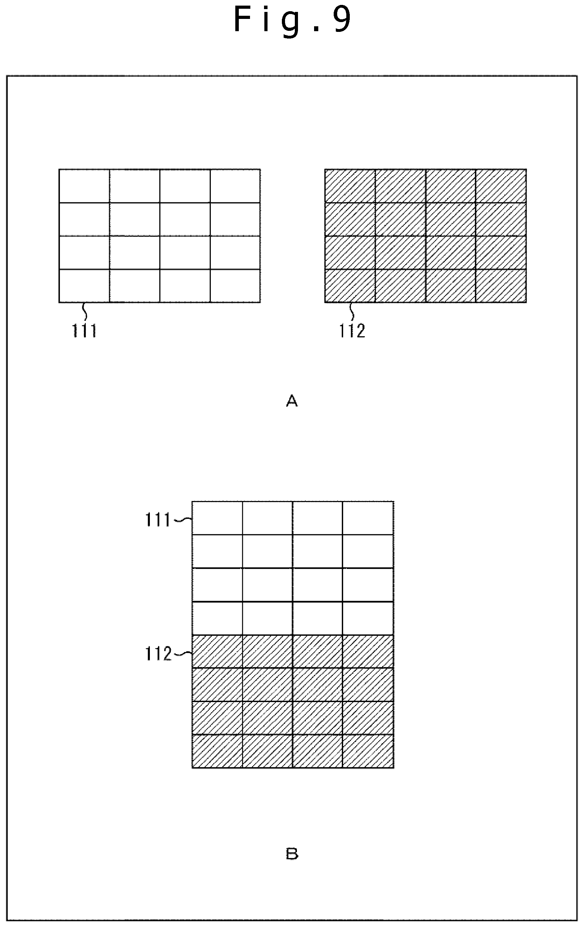

In the method described in NPL 5, a layer group forming the MPI is packed and encoded by a predetermined method. At this time, as illustrated in A of Fig. 9, a color layer group 111 in which layer groups of color components forming the MPI are allocated and an alpha layer group 112 in which layer groups of alpha components are allocated are formed. In the case of the method described in NPL 5, since the ratio of the number of layers of the color layer to the number of layers of the alpha layer is 1: 1, the sizes and shapes of the color layer group 111 are the same as the sizes and shapes of the alpha layer group 112.

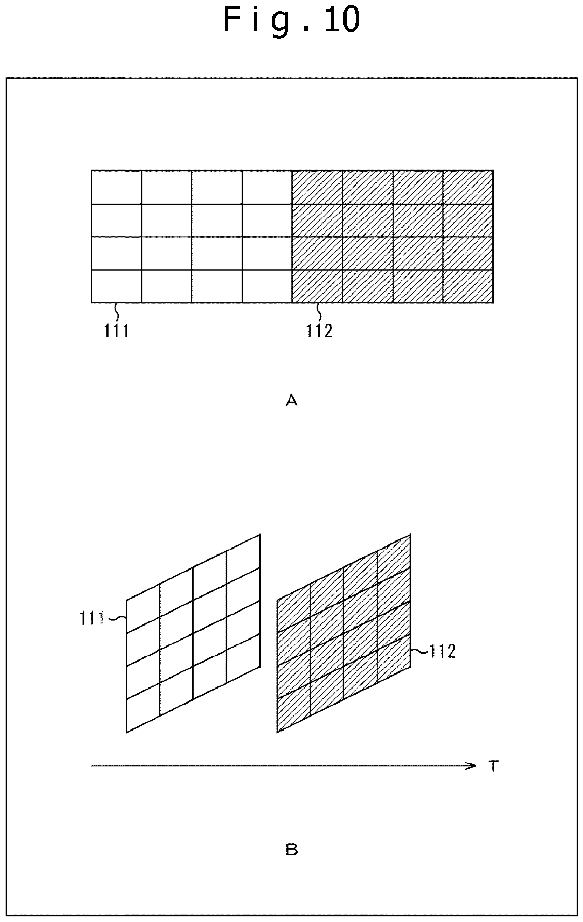

Such a color layer group 111 and an alpha layer group 112 are allocated and packed. For example, as illustrated in B of Fig. 9, the color layer group 111 and the alpha layer group 112 may be allocated in the vertical direction (stacked) and packed. As illustrated in A of Fig. 10, the color layer group 111 and the alpha layer group 112 may be allocated in the horizontal direction and packed (stacked). As illustrated in B of Fig. 10, the color layer group 111 and the alpha layer group 112 may be allocated (stacked) in the time (T) direction and packed. That is, the color layer group 111 and the alpha layer group 112 may be stacked as a continuous frame. The color layer group 111 and the alpha layer group 112 are stacked according to a method designated from among predetermined options prepared in advance.

However, since the ratio of the number of layers of the color layer to the number of layers of the alpha layer is fixed as described above, there is a constraint that it is difficult to optimize the layer number ratio according to, for example, content or the like. Therefore, there is a concern that the quality of the rendering image is reduced.

For example, if the number of layers of the alpha layer is insufficient, the sampling density of the alpha component (shape information) becomes insufficient depending on the viewpoint position, and accordingly, there is a concern that reduction in subjective quality called a stacked card effect in which the outer contour of the object becomes rough occurs in the rendering image. When the number of layers is increased, it is possible to suppress an occurrence of the stacked card effect, but the processing time and the data amount of encoding, decoding, rendering, and the like are increased. Since the ratio of the number of layers of the color layer to the number of layers of the alpha layer is fixed, when the number of layers of the alpha layer is increased, the number of color layers is also increased. Therefore, in a case where the number of layers of the color layer is sufficient, there is a concern that the processing time and the data amount are unnecessarily increased. Furthermore, in a system, the processing time and the data amount of encoding, decoding, rendering, and the like are generally limited, and it has been difficult to increase the number of layers without limitation. Thus, in a case where the processing time and the data amount reach the upper limit of the system, it is difficult to suppress the reduction in the subjective quality of the rendering image due to the insufficient number of layers of the alpha layer.

Therefore, in a case where Method 1 is applied, as illustrated in the second row from the top of the table in Fig. 7, information regarding the relative number of the alpha layers with respect to the color layers may be transmitted (Method 1-1). For example, in the first image processing device, the first image processing method, and the first program, the inter-layer relative information added to the bitstream may include information regarding the relative number of layers of the alpha component with respect to the layers of the color component. In addition, in the second image processing device, the second image processing method, and the second program, similarly, the inter-layer relative information added to the bitstream may include information regarding the relative number of layers of the alpha component with respect to the layers of the color component.

The information regarding the relative number of alpha layers to the color layers may be added to the bitstream by any method. For example, the information regarding the relative number of the alpha layers with respect to these color layers may be stored in the SEI added to the bitstream of the 3D data. Of course, other methods may be applied.

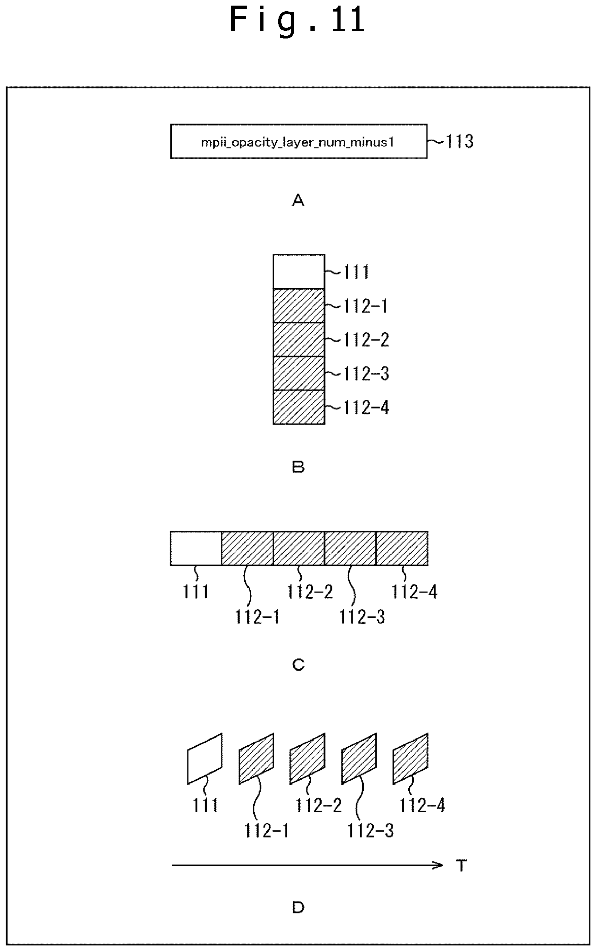

For example, a parameter "mpii_opacity_layer_num_minus1" as indicated by a square 113 in A of Fig. 11 may be stored in the SEI added to the bitstream of the 3D data. The value of the parameter "mpii_opacity_layer_num_minus1" indicates the relative number of the alpha layers with respect to the color layers. In other words, the value of the parameter "mpii_opacity_layer_num_minus1" indicates the ratio of the number of layers between the color layers and the alpha layers. That is, in the 3D data, the color layers and the alpha layers are configured at the ratio indicated by this parameter "mpii_opacity_layer_num_minus1".

For example, in a case where the value of the parameter "mpii_opacity_layer_num_minus1" is "5", the ratio of the number of layers between the color layers and the alpha layers in the 3D data is 1: 4. That is, in packing, a layer group of alpha layers of which the number is four times the layer group of the color layer is stacked. For example, as illustrated in B of Fig. 11 to D of Fig. 11, four alpha layer groups 112 (A of Fig. 9) having the same size and shape as those of the color layer group 111 (A of Fig. 9) are stacked with respect to the color layer group 111. In Fig. 11, the four alpha layer groups 112 are also referred to as an alpha layer group 112-1, an alpha layer group 112-2, an alpha layer group 112-3, and an alpha layer group 112-4.

In that case, for example, as illustrated in B of Fig. 11, the color layer group 111, the alpha layer group 112-1, the alpha layer group 112-2, the alpha layer group 112-3, and the alpha layer group 112-4 may be allocated in the vertical direction and packed (stacked). Furthermore, as illustrated in C of Fig. 11, the color layer group 111, the alpha layer group 112-1, the alpha layer group 112-2, the alpha layer group 112-3, and the alpha layer group 112-4 may be allocated in the horizontal direction and packed (stacked). Furthermore, as illustrated in D of Fig. 11, the color layer group 111, the alpha layer group 112-1, the alpha layer group 112-2, the alpha layer group 112-3, and the alpha layer group 112-4 may be allocated in the time (T) direction and packed (stacked). That is, the color layer group 111, the alpha layer group 112-1, the alpha layer group 112-2, the alpha layer group 112-3, and the alpha layer group 112-4 may be stacked as a continuous frame. The color layer group 111, the alpha layer group 112-1, the alpha layer group 112-2, the alpha layer group 112-3, and the alpha layer group 112-4 may be stacked in accordance with a method designated from among these predetermined options prepared in advance.

By transmitting the information regarding the relative number of the alpha layers with respect to the color layers from the encoding side to the decoding side as described above, the decoder can easily recognize the ratio of the number of layers between the color layers and the alpha layers based on the information. In other words, the ratio of the number of layers between the color layers and the alpha layers can be made variable. For example, the ratio of the number of layers between the color layers and the alpha layers can be optimized according to the content or the like.

As described above, by making the ratio of the number of layers between the color layers and the alpha layers variable, it is possible to increase the number of layers of the alpha layer without increasing the number of layers of the color layer. For example, in a case where the number of layers of the color layer is sufficient, it is possible to suppress the shortage of the alpha layer and suppress the occurrence of the stacked card effect without unnecessarily increasing the processing time and the data amount. In addition, even in a case where the processing time or the data amount reaches the upper limit of the system, it is possible to suppress the shortage of the alpha layer and suppress the occurrence of the stacked card effect.

That is, by transmitting the information regarding the relative number of the alpha layers with respect to the color layers from the encoding side to the decoding side, it is possible to suppress the reduction in the subjective quality of the rendering image due to the insufficient number of layers of the alpha layer.

### <Method 1-2>

For example, in the method described in NPL 5, as illustrated in the syntax of Fig. 8, information for setting a relationship between the resolutions of the color layer and the alpha layer is not transmitted in the SEI. That is, the relationship between the resolutions of the color layer and the alpha layer (also considered to be the relationship between the number of pixels or the layer sizes) is fixed.

In the method described in NPL 5, as illustrated in Figs. 9 and 10, the resolutions (the number of pixels, examples, and sizes) of the color layer and the alpha layer are the same. That is, the ratio of resolution between the color layer and the alpha layer is fixed (1:1).

However, since the resolution ratio between the color layer and the alpha layer is fixed as described above, there is a constraint that it is difficult to optimize the resolution ratio according to, for example, content or the like. Therefore, there is a concern that the quality of the rendering image is reduced.

In general, a higher resolution is more important in the color layer than in the alpha layer. When the resolution of the color layer is insufficient, there is a concern that the texture is blurred and the reproducibility at the time of rendering is lowered (that is, the subjective quality of the rendering image is reduced). By increasing the resolution, the occurrence of such texture blurring can be suppressed, but it causes an increase in processing time and data amount of encoding, decoding, rendering, and the like. Because the resolution ratio between the color layer and the alpha layer is fixed, when the resolution of the color layer is increased, the resolution of the alpha layer is also increased. Therefore, in a case where the resolution of the alpha layer is sufficient, there is a concern that the processing time and the data amount are unnecessarily increased. Furthermore, in a system, the processing time and the data amount of encoding, decoding, rendering, and the like are generally limited, and it has been difficult to increase the resolution without limitation. Thus, in a case where the processing time and the data amount reach the upper limit of the system, it is difficult to suppress the reduction in the subjective quality of the rendering image due to the insufficient resolution of the color layer.

Therefore, in a case where Method 1 is applied, as illustrated in the third row from the top of the table in Fig. 7, information regarding the relative resolution of the alpha layer with respect to the color layer may be transmitted (Method 1-2). For example, in the first image processing device, the first image processing method, and the first program, the inter-layer relative information added to the bitstream may include information regarding the relative resolution of the layer of the alpha component with respect to the layer of the color component. In addition, in the second image processing device, the second image processing method, and the second program, similarly, the inter-layer relative information added to the bitstream may include information regarding the relative resolution of the layer of the alpha component with respect to the layer of the color component.

The information regarding the relative resolution of the alpha layer with respect to the color layer may be added to the bitstream by any method. For example, the information regarding the relative resolution of the alpha layer with respect to the color layer may be stored in the SEI added to the bitstream of the 3D data. Of course, other methods may be applied.

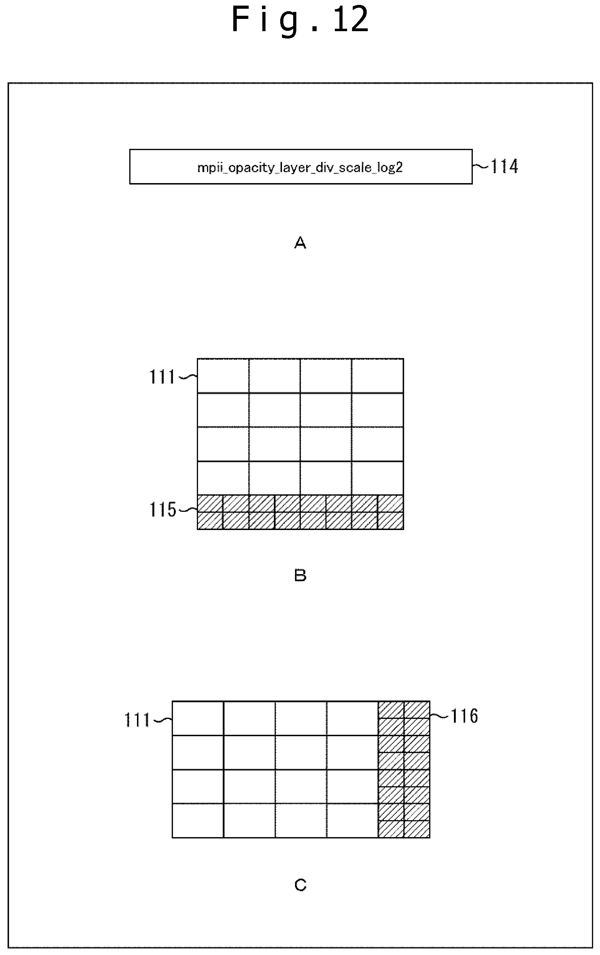

For example, a parameter "mpii_opacity_layer_div_scale_log2" as indicated by a square 114 in A of Fig. 12 may be stored in the SEI added to the bitstream of the 3D data. The value of the parameter "mpii_opacity_layer_div_scale_log2" indicates the relative resolution of the alpha layer with respect to the color layer. In other words, the value of the parameter "mpii_opacity_layer_div_scale_log2" indicates the ratio of the resolution between the color layer and the alpha layer. That is, the size ratio between the color layer and the alpha layer is the ratio indicated by the parameter "mpii_opacity_layer_div_scale_log2".

For example, in a case where the ratio of the resolution between the color layer and the alpha layer is 4: 1, the size of the alpha layer group is also 1/4 of the color layer group as illustrated in B of Fig. 11 or C of Fig. 11. At that time, the layer group may be formed so that the layers can be stacked in a rectangle. For example, in a case where the color layer group and the alpha layer group are stacked in the vertical direction as illustrated in B of Fig. 11, the alpha layer group 115 may be formed so that the length of the alpha layer group 115 in the horizontal direction is the same as that of the color layer group 111. In addition, in a case where the color layer group and the alpha layer group are stacked in the horizontal direction as illustrated in C of Fig. 11, an alpha layer group 116 may be formed so that the length of the alpha layer group 116 in the vertical direction is the same as that of the color layer group 111.

The shape of a region as an encoding target needs to be rectangular. Therefore, by forming the layer group so that it can be stacked in a rectangle according to the value (that is, the resolution ratio) of the parameter "mpii_opacity_layer_div_scale_log2" as described above, the layer group can be packed without waste. That is, the rectangular region as the encoding target can be filled with the layer group without having a free region. Thus, it is possible to suppress an unnecessary increase in the data amount. In other words, the color layer group and the alpha layer group do not need to be stacked in a rectangle as long as the presence of a free space is allowed in the rectangular region as the encoding target after packing.

By transmitting the information regarding the relative resolution of the alpha layer with respect to the color layer from the encoding side to the decoding side as described above, the decoder can easily recognize the ratio of the resolution between the color layer and the alpha layer based on the information. In other words, the ratio of the resolution between the color layer and the alpha layer can be made variable. For example, the ratio of the resolution between the color layer and the alpha layer can be optimized according to the content or the like.

As described above, by making the ratio of the resolution between the color layer and the alpha layer variable, it is possible to increase the resolution of the color layer without increasing the resolution of the alpha layer. For example, in a case where the resolution of the alpha layer is sufficient, it is possible to suppress insufficiency of the resolution of the color layer and suppress the occurrence of blurring of texture without unnecessarily increasing the processing time and the data amount. Furthermore, even in a case where the processing time and the data amount reach the upper limit of the system, it is possible to suppress insufficiency of the resolution of the color layer and suppress the occurrence of blurring of texture.

That is, by transmitting the information regarding the relative resolution of the alpha layer with respect to the color layer from the encoding side to the decoding side, it is possible to suppress the reduction in the subjective quality of the rendering image due to the insufficient resolution of the color layer.

### <Method 1-3>

In addition, both the ratio of the numbers of layers and the ratio of resolutions between the color layer and the alpha layer may be made variable. That is, in a case where Method 1 is applied, as illustrated in the bottom row of the table in Fig. 7, the information regarding the relative number and the information regarding the relative resolution of the alpha layer with respect to the color layer may be transmitted (Method 1-3). For example, in the first image processing device, the first image processing method, and the first program, the inter-layer relative information added to the bitstream may include the information regarding the relative number of layers of the alpha component with respect to the layers of the color component and the information regarding the relative resolution of the layer of the alpha component with respect to the layer of the color component. In addition, in the second image processing device, the second image processing method, and the second program, similarly, the inter-layer relative information added to the bitstream may include the information regarding the relative number of layers of the alpha component with respect to the layers of the color component and the information regarding the relative resolution of the layer of the alpha component with respect to the layer of the color component.

Also in this case, the information regarding the relative number of the alpha layers with respect to the color layers and the information regarding the relative resolution of the alpha layer with respect to the color layer may be added to the bitstream by any method. For example, these types of information may be stored in the SEI added to the bitstream of the 3D data. Of course, other methods may be applied.

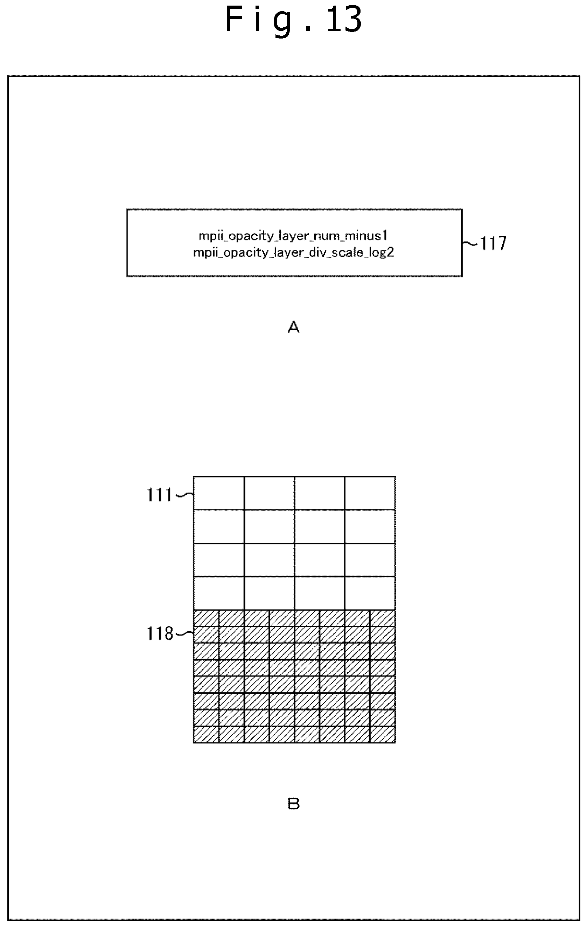

For example, as illustrated in a square 117 in A of Fig. 13, the parameter "mpii_opacity_layer_num_minus1" and the parameter "mpii_opacity_layer_div_scale_log2" may be stored in the SEI added to the bitstream of the 3D data. These parameters are as described above in <Method 1-1> and <Method 1-2>.

In this manner, it is possible to obtain both the effect obtained by applying Method 1-1 and the effect obtained by applying Method 1-2 described above.

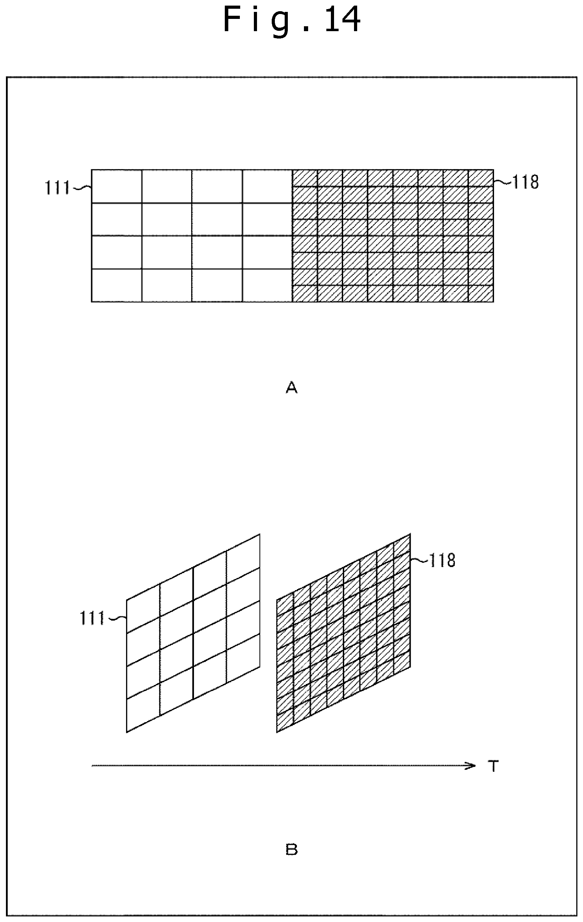

Furthermore, in this case, since both the ratio of the numbers of layers and the ratio of resolutions between the color layer and the alpha layer are made variable, for example, a layer group including an alpha layer having a different size from the color layer as in an alpha layer group 118 illustrated in B of Fig. 13 can be formed to have the same size as the color layer group 111. In this manner, for example, not only stacking the layers in the vertical direction as in the example illustrated in B of Fig. 13 or stacking the layers in the horizontal direction as in the example illustrated in A of Fig. 14, but also stacking the layers in the time direction as in the example illustrated in B of Fig. 14 can be performed. That is, the color layer group 111 and the alpha layer group 118 can be stacked as continuous frames. As described above, since the variation of the stack can be increased, it is possible to more efficiently perform packing.

### <Method 2>

In the method described in NPL 5, there is a constraint that the allocation pattern of the layers is fixed for the 3D data including the layer image of the color component and the layer image of the alpha component as described above. For example, when the positions of the nearest layer and the furthest layer are designated, the remaining layers are allocated at equal intervals therebetween.

However, in general, the depth and the parallax are in a reciprocal relationship. Thus, in order to make the quality of the object constant regardless of the position in the depth direction, it is necessary to cause the density of the layer to be higher at a nearer depth. Therefore, in a case where the layers are allocated at equal intervals as described above, for example, in a scene including a distant view such as outdoors, there is a concern that the quality of an object in a close view is reduced.

In general, objects do not exist uniformly in the depth direction. In addition, the importance of the quality of one object is not necessarily uniform in the depth direction. Therefore, there is a concern that the quality of the rendering image is reduced by allocating the layers at equal intervals in the depth direction.

For example, in a case where it is desired to express a background at infinity such as sky, it is necessary to set the position of the furthest layer to infinity. In this case, even if other objects exist only at a short distance from the viewpoint, there is a concern that the layers are allocated at equal intervals in a wide range up to infinity, the number of layers assigned to the position of the object is insufficient, and it becomes difficult to express the shape and texture of the object with sufficiently high accuracy. In addition, even for one object, the quality at a near depth that can be clearly viewed from the viewpoint has a larger influence on the image quality than the quality at a far depth. However, there is a concern that allocating the layers at equal intervals in the depth direction makes it difficult to express the shape and texture at the near depth of the object with sufficiently high accuracy. There is a concern that the quality of the rendering image is reduced due to reduction in the quality of the 3D data (reduction in reproducibility).

When the number of layers is increased, it is possible to suppress such reduction in the quality of 3D data, but it causes an increase in processing time and data amount of encoding, decoding, rendering, and the like. That is, when the total number of layers is simply increased, the density of layers is increased even at unnecessary depths. That is, there is a concern that it is necessary to increase an unnecessary layer, and the processing time and the data amount are unnecessarily increased. Furthermore, in a system, the processing time and the data amount of encoding, decoding, rendering, and the like are generally limited, and it has been difficult to increase the number of layers without limitation. Thus, in a case where the processing time and the data amount reach the upper limit of the system, it is difficult to suppress the reduction in the subjective quality of the rendering image by allocating the layers at equal intervals.

Note that, in the method described in NPL 5, the position of each layer can be designated. As a result, the allocation intervals of the layers can be non-equal intervals. However, in the case of this method, there is a concern that it is necessary to designate the positions of all the layers, and the data amount unnecessarily increases.

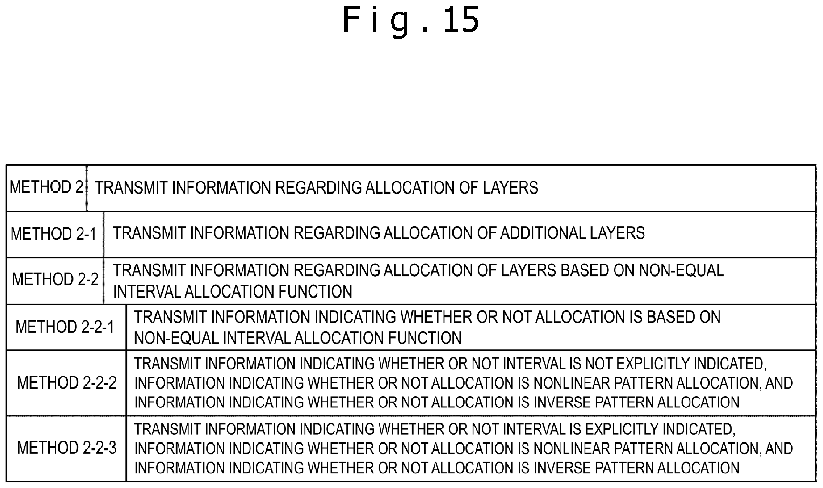

Therefore, in order to suppress reduction in the quality of the rendering image due to such a constraint, information regarding the allocation of the layer is transmitted as illustrated in the uppermost part of the table in Fig. 15 (Method 2).

For example, the first image processing device includes a layer allocation information generation unit that generates layer allocation information regarding the allocation of layers of 3D data including the layer image of the color component and the layer image of the alpha component, and an encoding unit that generates a bitstream by encoding the 3D data, and adds the layer allocation information to the bitstream. For example, the first image processing method includes generating layer allocation information regarding the allocation of layers of 3D data including the layer image of the color component and the layer image of the alpha component, by the first image processing device, and generating a bitstream by encoding the 3D data and adding the layer allocation information to the bitstream, by the first image processing device. For example, a first program causes the first image processing device to execute generating layer allocation information regarding the allocation of layers of 3D data including the layer image of the color component and the layer image of the alpha component, and generating a bitstream by encoding the 3D data and adding the layer allocation information to the bitstream.

For example, the second image processing device includes a decoding unit that decodes a bitstream and generates 3D data including a layer image of a color component and a layer image of an alpha component, a layer allocation information analysis unit that analyzes layer allocation information regarding the allocation of layers of the 3D data extracted from the bitstream, and a viewpoint image generation unit that renders the 3D data based on the layer allocation information and generates a viewpoint image viewed from any viewpoint. For example, the second image processing method includes decoding a bitstream and generating 3D data including the layer image of the color component and the layer image of the alpha component, by the second image processing device, analyzing layer allocation information regarding the allocation of layers of the 3D data extracted from the bitstream, by the second image processing device, and rendering the 3D data based on the layer allocation information and generating a viewpoint image viewed from any viewpoint, by the second image processing device. For example, the second program causes the second image processing device to execute decoding a bitstream and generating 3D data including the layer image of the color component and the layer image of the alpha component, analyzing layer allocation information regarding the allocation of layers of the 3D data extracted from the bitstream, and rendering the 3D data based on the layer allocation information and generating a viewpoint image viewed from any viewpoint.

This layer allocation information may be added to the bitstream by any method. For example, the layer allocation information may be stored in the SEI added to the bitstream of the 3D data. Of course, other methods may be applied.

By transmitting the layer allocation information from the encoding side to the decoding side as described above, the decoder can easily allocate each layer at any position based on the layer allocation information. Thus, for example, the layers can be allocated at non-equal intervals while suppressing an unnecessary increase in the data amount. As a result, for example, it is possible to optimize the layer allocation according to the content or the like. Thus, it is possible to suppress the reduction in the quality of the rendering image while suppressing the unnecessary increase in the data amount.

### <Method 2-1>

For example, information regarding the allocation of some layers of the 3D data may be transmitted as the layer allocation information. Some layers may be, for example, additional layers added to a basic layer group in which layers are allocated in a predetermined allocation pattern. That is, in a case where Method 2 is applied, as illustrated in the second row from the top of the table in Fig. 15, information regarding the allocation of additional layers may be transmitted (Method 2-1).

For example, in the first image processing device, the first image processing method, and the first program, the layer allocation information added to the bitstream may include the information regarding the allocation of some layers of the 3D data. In addition, in the second image processing device, the second image processing method, and the second program, similarly, the layer allocation information added to the bitstream may include the information regarding the allocation of some layers of the 3D data.

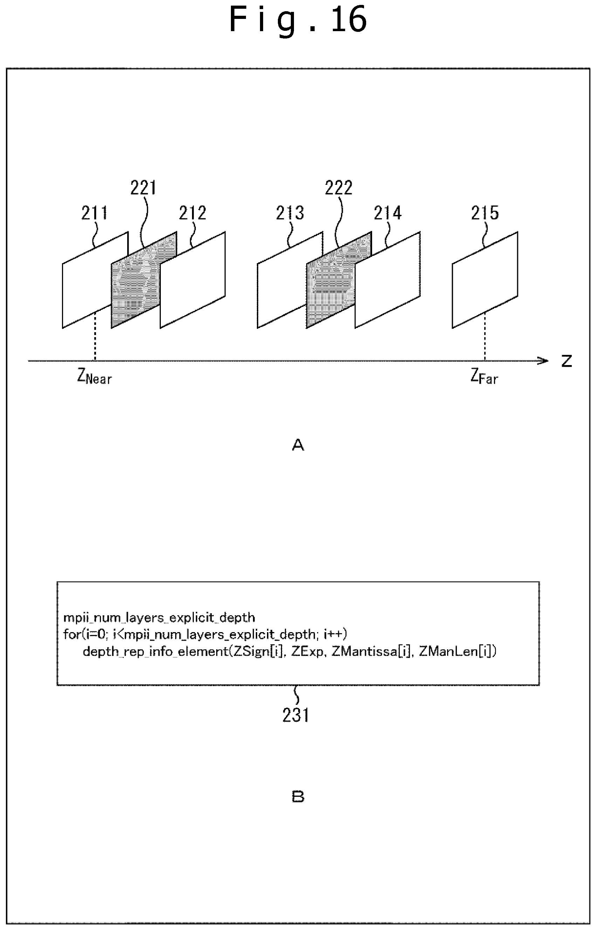

For example, as illustrated in A of Fig. 16, it is assumed that a layer group of 3D data includes layers 211 to 215 of a basic layer group allocated in a range of a distance Z_{Near} to Z_{Far} from a viewpoint, and an additional layer 221, and an additional layer 222. The additional layer 221 and the additional layer 222 are layers (that is, layers that do not belong to the basic layer group) other than the basic layer group. For example, when the layers (the layer 211 to the layer 215) of the basic layer group are allocated in accordance with a predetermined allocation pattern, the additional layer 221 and the additional layer 222 are allocated at positions that do not follow the predetermined allocation pattern.

By providing the additional layer in addition to the basic layer group as described above, it is possible to easily and freely control the density of the layer at each position in the depth direction. For example, it is possible to easily realize an increase in the density of the layer at the position where an object exists in the depth direction by using the additional layer. In addition, it is also possible to easily realize allocation of a reference layer group in a range where the object exists in the depth direction, and allocation of the additional layer at infinity. In this manner, the number of layers at desired positions can be increased without increasing the number of layers at unnecessary positions, and thus it is possible to suppress the reduction in the quality of the rendering image while suppressing an unnecessary increase in the data amount.

Note that, in the example in A of Fig. 16, a case where there are two additional layers (the additional layer 221 and the additional layer 222) is illustrated, but the number of additional layers may be any number. Furthermore, the allocation pattern (predetermined allocation pattern) of the basic layer may be determined in advance in a standard scale or the like, or may be designated by a user or the like. Further, the predetermined allocation pattern may be any pattern. For example, the layers may be allocated at equal intervals or may be allocated at non-equal intervals. For example, an allocation pattern based on a function may be used. For example, an allocation pattern (for example, an inversely proportional pattern, or a logarithmic pattern) in which a distance between the layers increases as a distance from the viewpoint increases may be used.

As described above, the information regarding the allocation of the additional layer as described above may be added to the bitstream as the layer allocation information.

For example, in the first image processing device, the first image processing method, and the first program, the information regarding the allocation of some layers added to the bitstream may include information indicating the positions of the some layers in the depth direction. In addition, in the second image processing device, the second image processing method, and the second program, similarly, the information regarding the allocation of some layers added to the bitstream may include information indicating the positions of the some layers in the depth direction.

For example, in the first image processing device, the first image processing method, and the first program, the information regarding the allocation of some layers added to the bitstream may include information indicating the number of the some layers. In addition, in the second image processing device, the second image processing method, and the second program, similarly, the information regarding the allocation of some layers added to the bitstream may include information indicating the number of the some layers.

For example, each parameter may be stored in the SEI added to the bitstream of the 3D data with syntax as indicated by a square 231 in B of Fig. 16. The value of a parameter "mpii_num_layers_explicit_depth" indicates the number of some layers (for example, additional layers). A parameter "depth_rep_info_element" indicates the positions of some layers (for example, additional layers) in the depth direction. That is, in the layer allocation information of this example, the position is designated for each additional layer.

As described above, by transmitting the information regarding the allocation of some layers (for example, additional layers) from the encoding side to the decoding side, the decoder can easily set the some layers (additional layers) at positions other than positions conforming to the predetermined allocation pattern of the basic layer group. Thus, it is possible to freely control the density of the layer at each position in the depth direction, and it is possible to suppress the reduction in the quality of the rendering image while suppressing the unnecessary increase in the data amount.

### <Method 2-2>

For example, the layers of the layer group forming the 3D data may be allocated at non-equal intervals. In other words, the allocation pattern of the layer group forming the 3D data may be a non-equal interval allocation pattern in which the layers are allocated at non-equal intervals. In other words, the non-equal interval allocation pattern may be designated as an allocation pattern of the layer group forming the 3D data, and information for designating the non-equal interval allocation pattern may be transmitted as the layer allocation information.

This non-equal interval allocation pattern may be designated by any method. For example, this non-equal interval allocation pattern may be designated by using a predetermined function. Hereinafter, a function for designating the non-equal interval allocation pattern is also referred to as a non-equal interval allocation function. That is, the non-equal interval allocation function is a function of allocating the layers at non-equal intervals. That is, in a case where Method 2 is applied, as illustrated in the third row from the top of the table in Fig. 15, information regarding the allocation of the layers based on the non-equal interval allocation function may be transmitted (as the layer allocation information) (Method 2-2).

For example, in the first image processing device, the first image processing method, and the first program, the layer allocation information added to the bitstream may include the information regarding the allocation of the layers of the 3D data based on the non-equal interval allocation function. In addition, in the second image processing device, the second image processing method, and the second program, similarly, the layer allocation information added to the bitstream may include the information regarding the allocation of the layers of the 3D data based on the non-equal interval allocation function.

The non-equal interval allocation function may be any function. For example, the function may be such that the layer becomes denser at a nearer depth (that is, the density of the layer increases). In other words, the function may be such that the layer becomes sparser at a further depth (that is, the density of the layer becomes lower). For example, it is assumed that an index is assigned to each layer in ascending order from the near depth to the far depth. The function may be a function (also referred to as an inversely proportional allocation function below) in which the layers are allocated in an allocation pattern (also referred to as an inversely proportional pattern below) in which a difference in index between the furthest layer and this layer is inversely proportional to an interval between this layer and the adjacent layer. In addition, the function may be a function (also referred to as a logarithmic allocation function below) in which the layers are allocated in an allocation pattern (also referred to as a logarithmic pattern below) in which the interval between the layers exponentially increases according to the value of the index.

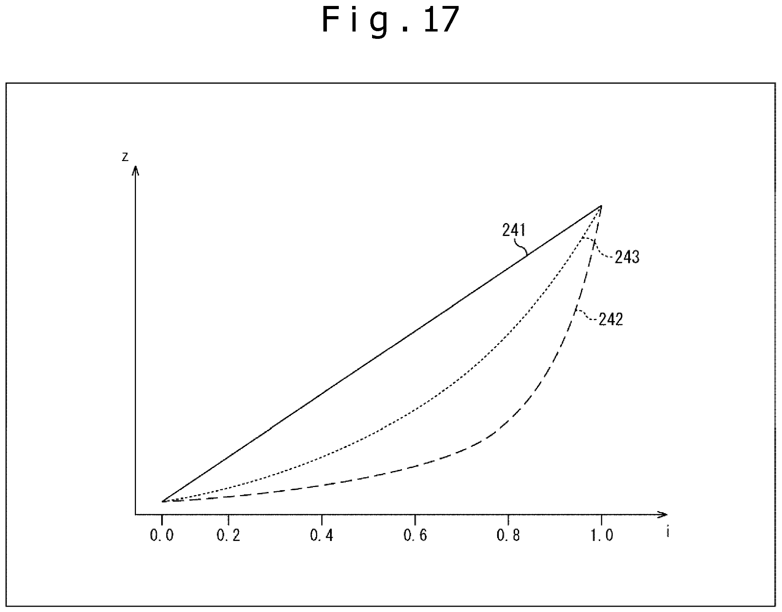

For example, a relationship between the layer index and the layer depth (position in the depth direction) is illustrated in the graph of Fig. 17. In the graph of Fig. 17, a straight line 241 indicates the relationship between the index (i) and the depth (Z) of each layer in a case where an equal interval allocation function for designating an equal interval allocation pattern for allocating layers at equal intervals is applied. Note that the index (i) of each layer is normalized between "0" and "1". A curve 242 indicates the relationship between the index (i) and the depth (Z) of each layer in a case where the inversely proportional allocation function is applied. A curve 243 indicates the relationship between the index (i) and the depth (Z) of each layer in a case where the logarithmic allocation function is applied.

For example, the depth (Z(i)) of each layer (i) may be represented as the following expression (1).$Z \left(i\right) = g \left(f \left({Z}_{Near}\right)+i⋅\left(f\left({Z}_{Far}\right)-f\left({Z}_{Near}\right)\right)\right)$

In the case of the equal interval allocation function, f(x) = x and g(x) = x may be satisfied. In the case of the inversely proportional allocation function, f(x) = 1/x and g(x) = 1/x may be satisfied. In the case of the logarithmic allocation function, f(x) = log(x), g(x) = exp(x) may be satisfied. By designating the allocation pattern using such a function, the position of each layer can be designated without increasing the data amount. In addition, it is possible to easily allocate each layer in a predetermined allocation pattern. In addition, applying the inversely proportional allocation function or the logarithmic allocation function makes it possible to easily make the layer denser at a nearer depth (that is, the density of the layer becomes higher). In other words, it is possible to easily make the layer sparser at a further depth (that is, the density of the layer becomes lower). Thus, it is possible to suppress the reduction in the quality of an object in the close view due to the inverse relationship between the depth and the parallax.

### <Method 2-2-1>

The allocation pattern of the layers as described above may be determined in advance, and may be set by a user or the like. For example, in a case where Method 2-2 is applied, as illustrated in the fourth row from the top of the table in Fig. 15, information indicating whether or not the allocation of the layers is based on the non-equal interval allocation function may be transmitted (as the layer allocation information) (Method 2-2-1).

For example, in the first image processing device, the first image processing method, and the first program, the "information regarding the allocation based on the non-equal interval allocation function" added to the bitstream may include information indicating whether or not the layer is allocated based on the non-equal interval allocation function. In addition, in the second image processing device, the second image processing method, and the second program, similarly, the "information regarding the allocation based on the non-equal interval allocation function" added to the bitstream may include information indicating whether or not the layer is allocated based on the non-equal interval allocation function.

The "information indicating whether or not the layer is allocated based on the non-equal interval allocation function" may be information for designating a mode of a method of allocating the layer.

For example, in the first image processing device, the first image processing method, and the first program, the "information regarding the allocation based on the non-equal interval allocation function" added to the bitstream may include information for designating a mode of the method of allocating the layer. In addition, in the second image processing device, the second image processing method, and the second program, similarly, the "information regarding the allocation based on the non-equal interval allocation function" added to the bitstream may include information for designating a mode of the method of allocating the layer.

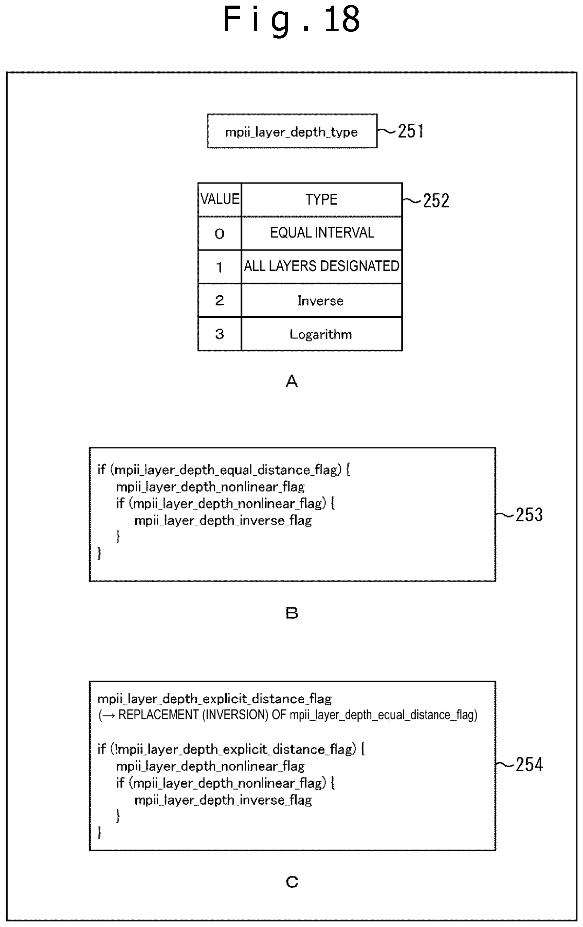

For example, a parameter "mpii_layer_depth_type" as illustrated in a square 251 in A of Fig. 18 may be transmitted. The parameter "mpii_layer_depth_type" is information for designating the mode of the method of allocating the layer. For example, the parameter "mpii_layer_depth_type" may specify the mode to be applied by the value thereof, for example, as shown in a table 252 in A of Fig. 18. For example, in a case where the value of the parameter "mpii_layer_depth_type" is "0", this indicates that a mode for allocating the layers based on the equal interval allocation function is designated. Furthermore, in a case where the value of the parameter "mpii_layer_depth_type" is "1", this indicates that a mode for designating the positions of all layers is designated. Furthermore, in a case where the value of the parameter "mpii_layer_depth_type" is "2", this indicates that the mode for allocating the layers is designated based on the inversely proportional allocation function (Inverse). Furthermore, in a case where the value of the parameter "mpii_layer_depth_type" is "3", this indicates that the mode for allocating the layers is designated based on the logarithmic allocation function (Logarithm). That is, the parameter "mpii_layer_depth_type" can also be considered to be information indicating whether or not the layer is allocated based on the non-equal interval allocation function.

By transmitting such a parameter "mpii_layer_depth_type" as the "information regarding allocation based on the non-equal interval allocation function" from the encoding side to the decoding side, the decoder can allocate the layers in the mode designated by the parameter "mpii_layer_depth_type". Thus, it is possible to realize more various allocation patterns, and to optimize the allocation of the layers in more various cases. That is, in more various cases, it is possible to suppress the reduction in the quality of the rendering image while suppressing the unnecessary increase in the data amount.

### <Method 2-2-2>

Furthermore, in a case where Method 2-2 is applied, as illustrated in the fifth row from the top of the table in Fig. 15, information indicating whether or not the interval is not explicitly indicated, information indicating whether or not the allocation is a nonlinear pattern allocation, and information indicating whether or not the allocation is an inversely proportional (Inverse) pattern allocation may be transmitted (as the layer allocation information) (Method 2-2-2).

For example, in the first image processing device, the first image processing method, and the first program, the "information regarding the allocation based on the non-equal interval allocation function" added to the bitstream may include information indicating whether or not the layer is allocated with an inversely proportional pattern. In addition, in the second image processing device, the second image processing method, and the second program, similarly, the "information regarding the allocation based on the non-equal interval allocation function" added to the bitstream may include information indicating whether or not the layer is allocated with an inversely proportional pattern.

In addition, in the first image processing device, the first image processing method, and the first program, the "information regarding the allocation based on the non-equal interval allocation function" added to the bitstream may include information indicating whether or not the layer is allocated with a nonlinear pattern. In addition, in the second image processing device, the second image processing method, and the second program, similarly, the "information regarding the allocation based on the non-equal interval allocation function" added to the bitstream may include information indicating whether or not the layer is allocated with a nonlinear pattern.

Furthermore, in the first image processing device, the first image processing method, and the first program, the "information regarding the allocation based on the non-equal interval allocation function" added to the bitstream may include information indicating whether or not the interval between the layers is not explicitly indicated. In addition, in the second image processing device, the second image processing method, and the second program, similarly, the "information regarding the allocation based on the non-equal interval allocation function" added to the bitstream may include information indicating whether or not the interval between the layers is not explicitly indicated.

For example, a parameter "mpii_layer_depth_equal_distance_flag", a parameter "mpii_layer_depth_nonlinear_flag", and a parameter "mpii_layer_depth_inverse_flag" may be transmitted as the "information regarding allocation based on the non-equal interval allocation function".

The parameter "mpii_layer_depth_equal_distance_flag" is flag information indicating whether or not the interval between the layers is not explicitly indicated. In a case where the flag information is true (for example, "1"), this indicates that the interval between the layers is not explicitly indicated. In a case where the flag information is false (for example, "0"), this indicates that the interval between the layers is explicitly indicated. For example, in a case where the flag information is false, this may indicate that the mode for designating the positions of all layers is designated.

The parameter "mpii_layer_depth_nonlinear_flag" is flag information indicating whether or not the layer is allocated with a non-linear pattern. The non-linear pattern is an allocation pattern in which the layers are allocated at non-linear intervals. In a case where the flag information is true (for example, "1"), this indicates that the layer is allocated with the non-linear pattern. In a case where the flag information is false (for example, "0"), this indicates that the layer is not allocated with the non-linear pattern. For example, in a case where the flag information is false, this may indicate that the mode for allocating the layers based on the equal interval allocation function is designated.

The parameter "mpii_layer_depth_inverse_flag" is flag information indicating whether or not the layer is allocated with an inversely proportional pattern. In a case where the flag information is true (for example, "1"), this indicates that the layer is allocated in the inversely proportional pattern. In a case where the flag information is false (for example, "0"), this indicates that the layer is not allocated with the inversely proportional pattern. That is, in a case where the flag information is true, this may indicate that the mode for allocating the layers is designated based on the inversely proportional allocation function (Inverse). Furthermore, in a case where the flag information is false, this may indicate that the mode for allocating the layers is designated based on the logarithmic allocation function (Logarithm).

These parameters may be stored in the SEI added to the bitstream of the 3D data with syntax as shown in a square 253 in B of Fig. 18. That is, in a case where the parameter "mpii_layer_depth_equal_distance_flag" is true, the parameter "mpii_layer_depth_nonlinear_flag" may be set, and in a case where the value thereof is true, the parameter "mpii_layer_depth_inverse_flag" may be set. In a case where the parameter "mpii_layer_depth_equal_distance_flag" is false, the mode for designating the positions of all the layers may be designated. In a case where the parameter "mpii_layer_depth_nonlinear_flag" is false, the mode for allocating the layers may be designated based on the equal interval allocation function. In a case where the parameter "mpii_layer_depth_inverse_flag" is true, the mode for allocating the layers may be designated based on the inversely proportional allocation function (Inverse). In a case where the parameter "mpii_layer_depth_inverse_flag" is false, the mode for allocating the layers may be designated based on the logarithmic allocation function (Logarithm).

By transmitting each of such parameters as the "information regarding allocation based on the non-equal interval allocation function" from the encoding side to the decoding side, the decoder can allocate the layers in the modes indicated by these parameters. Thus, it is possible to realize more various allocation patterns, and to optimize the allocation of the layers in more various cases. That is, in more various cases, it is possible to suppress the reduction in the quality of the rendering image while suppressing the unnecessary increase in the data amount.

### <Method 2-2-3>

Note that a parameter "mpii_layer_depth_explicit_distance_flag" may be applied instead of the parameter "mpii_layer_depth_equal_distance_flag". The parameter "mpii_layer_depth_explicit_distance_flag" is flag information indicating whether or not the interval between the layers is explicitly indicated. In a case where the flag information is true (for example, "1"), this indicates that the interval between the layers is explicitly indicated. In a case where the flag information is false (for example, "0"), this indicates that the interval between the layers is not explicitly indicated. For example, in a case where the flag information is true, this may indicate that the mode for designating the positions of all layers is designated. That is, in a case where Method 2-2 is applied, as illustrated in the bottom row of the table in Fig. 15, the information indicating whether or not the interval is explicitly indicated, the information indicating whether or not the allocation is the non-linear pattern allocation, and the information indicating whether or not the allocation is the inversely proportional (Inverse) pattern allocation may be transmitted (as the layer allocation information) (Method 2-2-3).

For example, in the first image processing device, the first image processing method, and the first program, the "information regarding the allocation based on the non-equal interval allocation function" added to the bitstream may include information indicating whether or not the interval between the layers is explicitly indicated. In addition, in the second image processing device, the second image processing method, and the second program, similarly, the "information regarding the allocation based on the non-equal interval allocation function" added to the bitstream may include information indicating whether or not the interval between the layers is explicitly indicated.

These parameters may be stored in the SEI added to the bitstream of the 3D data with syntax as shown in a square 254 in C of Fig. 18. That is, in a case where the parameter "mpii_layer_depth_explicit_distance_flag" is false, the parameter "mpii_layer_depth_nonlinear_flag" may be set, and in a case where the value thereof is true, the parameter "mpii_layer_depth_inverse_flag" may be set. In a case where the parameter "mpii_layer_depth_explicit_distance_flag" is true, the mode for designating the positions of all the layers may be designated. In a case where the parameter "mpii_layer_depth_nonlinear_flag" is false, the mode for allocating the layers may be designated based on the equal interval allocation function. In a case where the parameter "mpii_layer_depth_inverse_flag" is true, the mode for allocating the layers may be designated based on the inversely proportional allocation function (Inverse). In a case where the parameter "mpii_layer_depth_inverse_flag" is false, the mode for allocating the layers may be designated based on the logarithmic allocation function (Logarithm).

By transmitting each of such parameters as the "information regarding allocation based on the non-equal interval allocation function" from the encoding side to the decoding side, the decoder can allocate the layers in the modes indicated by these parameters. Thus, it is possible to realize more various allocation patterns, and to optimize the allocation of the layers in more various cases. That is, in more various cases, it is possible to suppress the reduction in the quality of the rendering image while suppressing the unnecessary increase in the data amount.

### <Method 3>

In the method described in NPL 5, there is a constraint that the shapes of the layers are fixed for the 3D data including the layer image of the color component and the layer image of the alpha component as described above. In this method, an MPI is applied as 3D data, and the shape of the layer is a plane. Therefore, in a scene with a wide angle of view, there is a concern that the resolution is reduced in the vicinity of the center of a distant scene, and the quality of a rendering image including this portion is reduced.

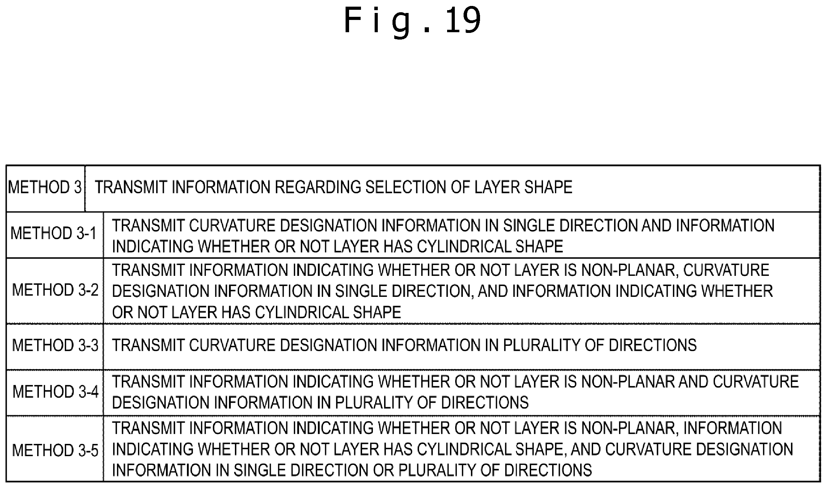

Therefore, in order to suppress reduction in the quality of the rendering image due to such a constraint, information regarding selection of the layer shape is transmitted as illustrated in the uppermost part of the table in Fig. 19 (Method 3). That is, the shape of the layer may be selectable.

For example, the first image processing device includes a layer shape selection information generation unit that generates layer shape selection information regarding selection of the shape of a layer of 3D data including a layer image of a color component and a layer image of an alpha component, and an encoding unit that generates a bitstream by encoding the 3D data and adds the layer shape selection information to the bitstream. For example, the first image processing method includes generating layer shape selection information regarding selection of the shape of a layer of 3D data including the layer image of the color component and the layer image of the alpha component, by the first image processing device, and generating a bitstream by encoding the 3D data and adding the layer shape selection information to the bitstream, by the first image processing device. For example, the first program causes the first image processing device to execute generating layer shape selection information regarding selection of the shape of a layer of 3D data including the layer image of the color component and the layer image of the alpha component, and generating a bitstream by encoding the 3D data and adding the layer shape selection information to the bitstream.

For example, the second image processing device includes a decoding unit that decodes a bitstream and generates 3D data including a layer image of a color component and a layer image of an alpha component, a layer shape selection information analysis unit that analyzes layer shape selection information regarding selection of the shape of the layer of the 3D data extracted from the bitstream, and a viewpoint image generation unit that renders the 3D data based on the layer shape selection information and generates a viewpoint image viewed from any viewpoint. For example, the second image processing method includes decoding a bitstream and generating 3D data including the layer image of the color component and the layer image of the alpha component, by the second image processing device, analyzing layer shape selection information regarding selection of the shape of a layer of the 3D data extracted from the bitstream, by the second image processing device, and rendering the 3D data based on the layer shape selection information and generating a viewpoint image viewed from any viewpoint, by the second image processing device. For example, the second program causes the second image processing device to execute decoding a bitstream and generating 3D data including the layer image of the color component and the layer image of the alpha component, analyzing layer shape selection information regarding selection of the shape of a layer of the 3D data extracted from the bitstream, and rendering the 3D data based on the layer shape selection information and generating a viewpoint image viewed from any viewpoint.

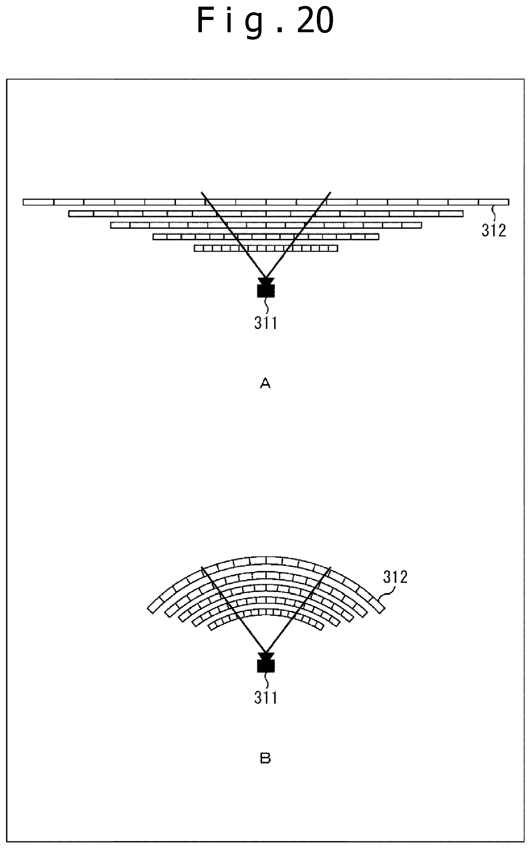

As illustrated in A of Fig. 20, the MPI includes a planar layer group. When the resolution of each layer is made constant, there is a concern that the resolution is reduced in the vicinity of the center of a distant scene in a scene with a wide angle of view. In the example of A of Fig. 20, in a case where the vicinity of the center of the scene is viewed from a viewpoint 311, a square 312 is larger in the layer at a far depth than in the layer at a near depth. The square 312 schematically indicates a pixel of each layer. Thus, when a range covered by each layer is constant, the size of the square 312 of each layer is the same. However, since the layer is planar, the square 312 becomes larger as the layer is farther from the viewpoint 311. That is, a range covered by one pixel becomes wider. In other words, the number of pixels included in the angle of view of a viewpoint image of the viewpoint 311 decreases as the layer is farther from the viewpoint 311. That is, the farther the layer is from the viewpoint 311, the lower the resolution is. Therefore, there is a concern that the quality of a rendering image including this portion is reduced.

Therefore, as illustrated in B of Fig. 20, the layer may have a curved surface shape. In the case of the example of B of Fig. 20, the layer is bent with a predetermined curvature, and a difference in size of the square 312 between the layer at a near depth and the layer at a far depth is smaller than that in the case of the example of A of Fig. 20. That is, the difference in the range covered by one pixel between the layer at a near depth and the layer at a far depth is smaller than that in the example of A of Fig. 20. The reduction in the resolution of the layer far from the viewpoint 311, which is included in the angle of view of the viewpoint image of the viewpoint 311, is suppressed. Therefore, it is possible to suppress the reduction in the quality of the rendering image including this portion.

Note that examples of 3D data including a layer group having a curved surface shape include a multi cylinder image (MCI) including a layer group having a cylindrical shape and a multi sphere image (MSI) including a layer group having a spherical shape. The layer of the MCI is considered to be bent in one direction. The layer of the MSI is considered to be bent in two directions.

As described above, the MCI or the MSI can suppress reduction in the resolution in the vicinity of the center of a distant scene as compared with the MPI. However, in the MPI, it is easier to set layers than in MCI or MSI, and it is possible to suppress an increase in processing load.

As described above, by transmitting the information regarding the selection of the layer shape and making it possible to select the shape of the layer, for example, it is possible to select and apply an optimum method for content from the MPI, the MCI, and the MSI. As a result, it is possible to suppress the reduction in the quality of the rendered image while suppressing an unnecessary increase in the load of processing such as encoding, decoding, and reproduction.

### <Method 3-1>

For example, in a case where Method 3 is applied, as illustrated in the second row from the top of the table in Fig. 19, curvature designation information in the single direction and information indicating whether the shape is a cylindrical shape may be transmitted (Method 3-1).

For example, in the first image processing device, the first image processing method, and the first program, the layer shape selection information added to the bitstream may include curvature designation information for designating a curvature in the single direction of the layer and information indicating whether or not the layer has a cylindrical shape. In addition, in the second image processing device, the second image processing method, and the second program, similarly, the layer shape selection information added to the bitstream may include curvature designation information for designating a curvature in the single direction of the layer and information indicating whether or not the layer has a cylindrical shape.

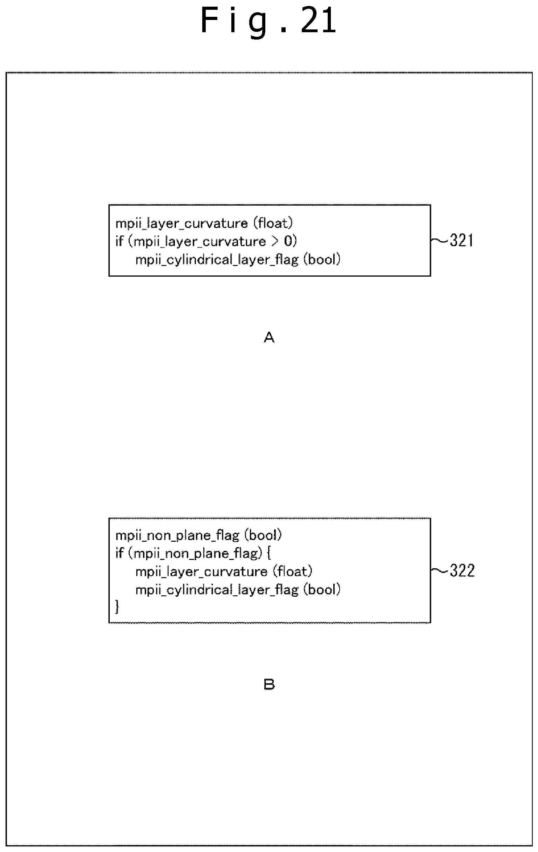

For example, as illustrated in a square 321 in A of Fig. 21, a parameter "mpii_layer_curvature" and a parameter "mpii_cylindrical_layer_flag" may be added to the bitstream as the layer shape selection information. The parameter "mpii_layer_curvature" is curvature designation information for designating the curvature of the layer in the single direction. The parameter "mpii_cylindrical_layer_flag" is flag information indicating whether or not the layer has a cylindrical shape. In a case where the flag information is true (for example, "1"), this indicates that the layer has a cylindrical shape (that is, this is the MCI). In a case where the flag information is false (for example, "0"), this indicates that the layer does not have a cylindrical shape (that is, this is not the MCI).

These parameters may be stored in the SEI added to the bitstream of 3D data according to the syntax as shown in the square 321 in A of Fig. 21. That is, the parameter "mpii_layer_curvature" may be set. In a case where the value of this parameter is "0", this indicates that the layer is planar (that is, this is the MPI). On the other hand, in a case where the value of this parameter is larger than "0", this indicates that the layer has a curved surface shape. In this case, the parameter "mpii_cylindrical_layer_flag" may be set. In a case where the flag information is true, this indicates that the layer has a cylindrical shape (that is, this is the MCI). In this case, the curvature indicated by the parameter "mpii_layer_curvature" may be applied to a bending direction of the layer. This bending direction may be any direction as long as the direction is a single direction. For example, the direction may be the horizontal direction, the vertical direction, or other directions. In addition, the bending direction may be determined in advance, or may be designated by a user or the like. In addition, in a case where the parameter "mpii_cylindrical_layer_flag" is false, this indicates that the layer does not have a cylindrical shape (that is, this is not the MCI). For example, in a case where this flag information is false, this may indicate that the layer has a spherical shape (that is, this is the MSI). In that case, the curvature indicated by the parameter "mpii_layer_curvature" may be applied to the bending direction of the layer. This bending direction may be any direction as long as the direction is a plurality of directions (for example, two directions perpendicular to each other). For example, the direction may be the horizontal direction and the vertical direction, or other directions. In addition, the bending direction may be determined in advance, or may be designated by a user or the like.

### <Method 3-2>

For example, in a case where Method 3 is applied, as illustrated in the third row from the top of the table in Fig. 19, information indicating whether or not the layer is non-planar, curvature designation information in a single direction, and information indicating whether or not the layer has a cylindrical shape may be transmitted (Method 3-2).

For example, in the first image processing device, the first image processing method, and the first program, the layer shape selection information added to the bitstream may include information indicating whether or not the layer is non-planar, curvature designation information for designating curvature of the layer in the single direction, and information indicating whether or not the layer has a cylindrical shape. In addition, in the second image processing device, the second image processing method, and the second program, similarly, the layer shape selection information added to the bitstream may include information indicating whether or not the layer is non-planar, curvature designation information for designating curvature of the layer in the single direction, and information indicating whether or not the layer has a cylindrical shape.

For example, as illustrated in a square 322 in B of Fig. 21, a parameter "mpii_non_plane_flag", the parameter "mpii_layer_curvature", and the parameter "mpii_cylindrical_layer_flag" may be added to the bitstream as the layer shape selection information. The parameter "mpii_non_plane_flag" is flag information indicating whether or not the layer is non-planar. In a case where the flag information is true (for example, "1"), this indicates that the layer is non-planar. In a case where the flag information is false (for example, "0"), this indicates that the layer is not non-planar (that is, this is the MPI). The parameter "mpii_layer_curvature" and the parameter "mpii_cylindrical_layer_flag" are information as described above.

These parameters may be stored in the SEI added to the bitstream of 3D data according to the syntax as shown in the square 322 in B of Fig. 21. That is, the parameter "mpii_non_plane_flag" may be set. In a case where the flag information is false, this indicates that the layer is planar (that is, this is the MPI). On the other hand, in a case where the flag information is true, this indicates that the layer is non-planar. In this case, the parameter "mpii_layer_curvature" and the parameter "mpii_cylindrical_layer_flag" may be set. In a case where the parameter "mpii_cylindrical_layer_flag" is true, this indicates that the layer has a cylindrical shape. Thus, the curvature indicated by the parameter "mpii_layer_curvature" may be applied to a single bending direction of the layer. This bending direction may be any direction as long as the direction is a single direction. For example, the direction may be the horizontal direction, the vertical direction, or other directions. In addition, the bending direction may be determined in advance, or may be designated by a user or the like. In addition, in a case where the parameter "mpii_cylindrical_layer_flag" is false, this indicates that the layer has a spherical shape. Thus, the curvature indicated by the parameter "mpii_layer_curvature" may be applied to a plurality of bending directions of the layer. This bending direction may be any direction as long as the direction is a plurality of directions (for example, two directions perpendicular to each other). For example, the direction may be the horizontal direction and the vertical direction, or other directions. In addition, the bending direction may be determined in advance, or may be designated by a user or the like.

### <Method 3-3>

For example, in a case where Method 3 is applied, as illustrated in the fourth row from the top of the table in Fig. 19, curvature designation information in a plurality of directions may be transmitted (Method 3-3).

For example, in the first image processing device, the first image processing method, and the first program, the layer shape selection information added to the bitstream may include curvature designation information for designating a curvature in the plurality of directions of the layer. In addition, in the second image processing device, the second image processing method, and the second program, similarly, the layer shape selection information added to the bitstream may include curvature designation information for designating a curvature in the plurality of directions of the layer.

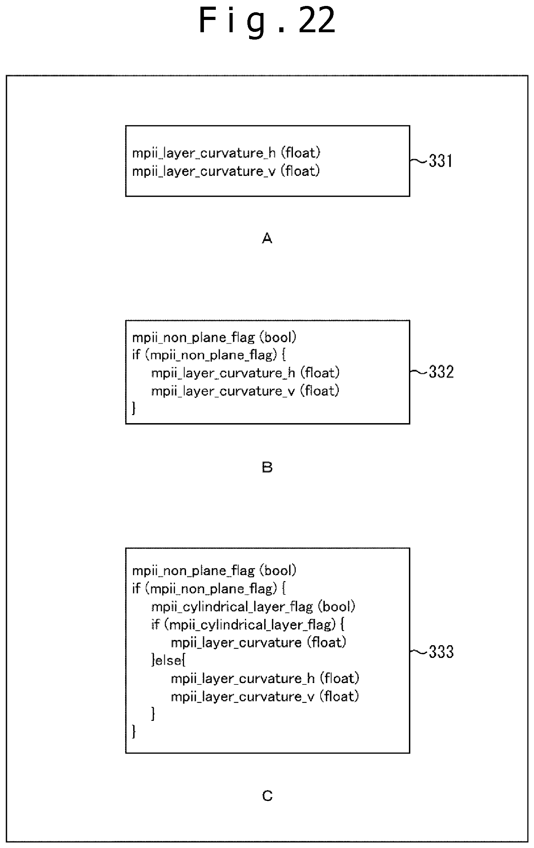

For example, as illustrated in a square 331 in A of Fig. 22, a parameter "mpii_layer_curvature_h" and a parameter "mpii_layer_curvature_v" may be added to the bitstream as the layer shape selection information. The parameter "mpii_layer_curvature_h" is curvature designation information for designating the curvature of the layer in the horizontal direction. The parameter "mpii_layer_curvature_v" is curvature designation information for designating the curvature of the layer in the vertical direction. That is, the parameter "mpii_layer_curvature_h" and the parameter "mpii_layer_curvature_v" may be set, and the curvatures indicated by these parameters may be applied to the horizontal direction and the vertical direction of the layer. In a case where both values of these parameters are "0", this indicates that the layer is planar (that is, this is the MPI). Among these parameters, in a case where the value of one parameter is "0" and the value of the other parameter is not "0", this indicates that the layer has a cylindrical shape (that is, this is the MCI). In a case where both the values of these parameters are not "0", this indicates that the layer has a spherical shape (that is, this is the MSI).

### <Method 3-4>

For example, in a case where Method 3 is applied, as illustrated in the fifth row from the top of the table in Fig. 19, information indicating whether or not the layer is non-planar and curvature designation information in a plurality of directions may be transmitted (Method 3-4).

For example, in the first image processing device, the first image processing method, and the first program, the layer shape selection information added to the bitstream may include information indicating whether or not the layer is non-planar and curvature designation information for designating curvatures in a plurality of directions of the layer. In addition, in the second image processing device, the second image processing method, and the second program, similarly, the layer shape selection information added to the bitstream may include information indicating whether or not the layer is non-planar and curvature designation information for designating curvatures in a plurality of directions of the layer.

For example, as illustrated in a square 332 in B of Fig. 22, the parameter "mpii_non_plane_flag", the parameter "mpii_layer_curvature_h", and the parameter "mpii_layer_curvature_v" may be added to the bitstream as the layer shape selection information. These parameters are information as described above.

These parameters may be stored in the SEI added to the bitstream of 3D data according to the syntax as shown in the square 332 in B of Fig. 22. That is, the parameter "mpii_non_plane_flag" may be set. In a case where the flag information is false, this indicates that the layer is planar (that is, this is the MPI). On the other hand, in a case where the flag information is true, this indicates that the layer has a non-planar shape. In this case, the parameter "mpii_layer_curvature_h" and the parameter "mpii_layer_curvature_v" may be set, and the curvatures indicated by these parameters may be applied to the horizontal direction and the vertical direction of the layer. Among these parameters, in a case where the value of one parameter is "0" and the value of the other parameter is not "0", this indicates that the layer has a cylindrical shape (that is, this is the MCI). In a case where both the values of these parameters are not "0", this indicates that the layer has a spherical shape (that is, this is the MSI).

### <Method 3-5>

For example, in a case where Method 3 is applied, as illustrated in the bottom row of the table in Fig. 19, information indicating whether or not the layer is non-planar, information indicating whether or not the layer has a cylindrical shape, and curvature designation information in a single direction or a plurality of directions may be transmitted (Method 3-5).

For example, in the first image processing device, the first image processing method, and the first program, the layer shape selection information added to the bitstream may include information indicating whether or not the layer is non-planar, information indicating whether or not the layer has a cylindrical shape, and curvature designation information for designating curvatures in a plurality of directions of the layer. For example, in the second image processing device, the second image processing method, and the second program, similarly, the layer shape selection information added to the bitstream may include information indicating whether or not the layer is non-planar, information indicating whether or not the layer has a cylindrical shape, and curvature designation information for designating curvatures in a plurality of directions of the layer.

For example, as illustrated in a square 333 in C of Fig. 22, the parameter "mpii_non_plane_flag", the parameter "mpii_cylindrical_layer_flag", the parameter "mpii_layer_curvature", or the parameter "mpii_layer_curvature_h" and the parameter "mpii_layer_curvature_v" may be added to the bitstream as the layer shape selection information. These parameters are information as described above.

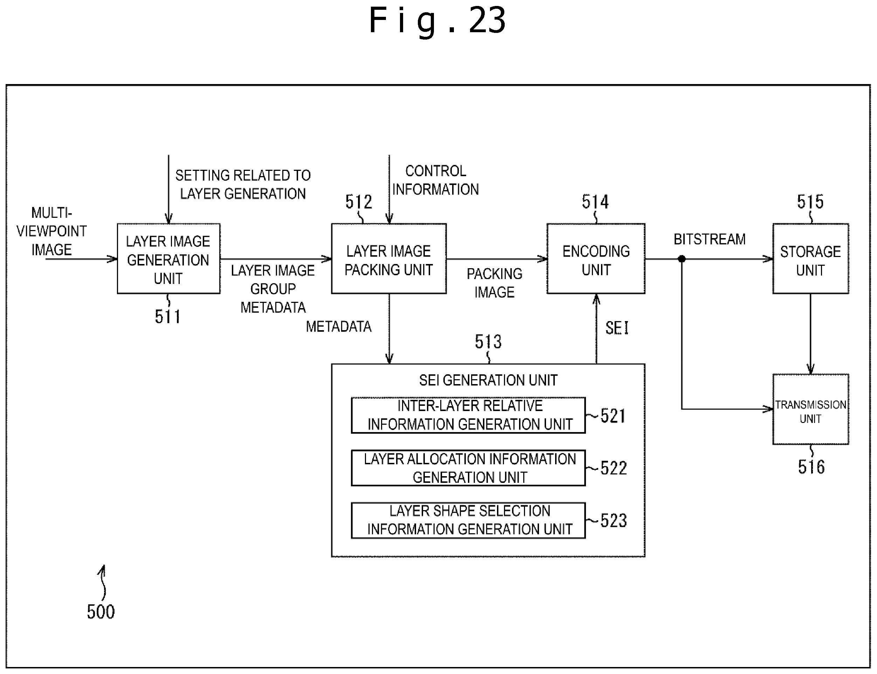

These parameters may be stored in the SEI added to the bitstream of 3D data according to the syntax as shown in the square 333 in C of Fig. 23. That is, the parameter "mpii_non_plane_flag" may be set. In a case where the flag information is false, this indicates that the layer is planar (that is, this is the MPI). On the other hand, in a case where the flag information is true, this indicates that the layer has a non-planar shape. In this case, the parameter "mpii_cylindrical_layer_flag" may be set. In a case where this parameter "mpii_cylindrical_layer_flag" is true, this indicates that the layer has a cylindrical shape. In that case, the parameter "mpii_layer_curvature" may be set, and the curvature indicated by the parameter "mpii_layer_curvature" may be applied to the single bending direction of the layer. This bending direction may be any direction as long as the direction is a single direction. For example, the direction may be the horizontal direction, the vertical direction, or other directions. In addition, the bending direction may be determined in advance, or may be designated by a user or the like. In addition, in a case where the parameter "mpii_cylindrical_layer_flag" is false, this indicates that the layer has a spherical shape. In this case, the parameter "mpii_layer_curvature_h" and the parameter "mpii_layer_curvature_v" may be set, and the curvatures indicated by these parameters may be applied to the horizontal direction and the vertical direction of the layer.

By applying any one of Method 3-1 to Method 3-5 described above, it is possible to select and apply an optimum method for the content from among the MPI, the MCI, and the MSI, for example. As a result, it is possible to suppress the reduction in the quality of the rendered image while suppressing an unnecessary increase in the load of processing such as encoding, decoding, and reproduction.

### <Regarding Application of Each Method>

Each method described above can be applied in combination with other methods as long as no contradiction occurs. For example, a plurality of methods among the methods shown in the table of Fig. 7 may be appropriately combined and applied. In addition, a plurality of methods among the methods shown in the table of Fig. 15 may be appropriately combined and applied. In addition, a plurality of methods among the methods shown in the table of Fig. 19 may be appropriately combined and applied. In addition, a plurality of methods in Method 1 shown in the table of Fig. 7, Method 2 shown in the table of Fig. 15, or Method 3 shown in the table of Fig. 19 may be appropriately combined and applied. In addition, the lower-level methods shown in the table in a certain drawing may be applied in appropriate combination with the methods shown in the tables other than the certain drawing. Of course, these methods may be applied in combination with other methods (not illustrated).

Note that, in the present specification, the description for the higher-level method may include the description for the lower-level method. For example, descriptions such as "applying Method 1" may also include applying any one or more of Method 1-1, Method 1-2, and Method 1-3. Similarly, descriptions such as "applying Method 2" may also include applying any one or more of Method 2-1, Method 2-2, Method 2-2-1, Method 2-2-2, and Method 2-2-3. Similarly, descriptions such as "applying Method 2-2" may also include applying any one or more of Method 2-2-1, Method 2-2-2, and Method 2-2-3. Similarly, descriptions such as "applying Method 3" may also include applying any one or more of Method 3-1, Method 3-2, Method 3-3, Method 3-4, and Method 3-5.

Thus, for example, Method 1 shown in the table in Fig. 7 and Method 2 shown in the table in Fig. 15 may be combined and applied.

For example, a first image processing device may include an inter-layer relative information generation unit that generates inter-layer relative information regarding a relative relationship between layers of 3D data including a layer image of a color component and a layer image of an alpha component, a layer allocation information generation unit that generates layer allocation information regarding allocation of layers of the 3D data, and an encoding unit that generates a bitstream by encoding the 3D data and adds the inter-layer relative information and the layer allocation information to the bitstream. For example, a first image processing method may include: generating inter-layer relative information regarding a relative relationship between layers of 3D data including a layer image of a color component and a layer image of an alpha component, by the first image processing device; generating layer allocation information regarding allocation of layers of the 3D data by the first image processing device; and generating a bitstream by encoding the 3D data and adding the inter-layer relative information and the layer allocation information to the bitstream, by the first image processing device. For example, a first program may cause the first image processing device to execute: generating inter-layer relative information regarding a relative relationship between layers of 3D data including a layer image of a color component and a layer image of an alpha component; generating layer allocation information regarding allocation of layers of the 3D data; and generating a bitstream by encoding the 3D data and adding the inter-layer relative information and the layer allocation information to the bitstream.

For example, a second image processing device may include a decoding unit that decodes a bitstream and generates 3D data including a layer image of a color component and a layer image of an alpha component, an inter-layer relative information analysis unit that analyzes inter-layer relative information regarding a relative relationship between layers of the 3D data extracted from the bitstream, a layer allocation information analysis unit that analyzes layer allocation information regarding allocation of layers of the 3D data extracted from the bitstream, and a viewpoint image generation unit that renders the 3D data based on the inter-layer relative information and the layer allocation information and generates a viewpoint image viewed from any viewpoint. For example, a second image processing method may include: decoding a bitstream and generating 3D data including a layer image of a color component and a layer image of an alpha component, by the second image processing device; analyzing inter-layer relative information regarding a relative relationship between layers of the 3D data extracted from the bitstream, by the second image processing device; analyzing layer allocation information regarding allocation of layers of the 3D data extracted from the bitstream, by the second image processing device; and rendering the 3D data based on the inter-layer relative information and the layer allocation information and generating a viewpoint image viewed from any viewpoint, by the second image processing device. For example, a second program may cause the second image processing device to execute: decoding a bitstream and generating 3D data including a layer image of a color component and a layer image of an alpha component; analyzing inter-layer relative information regarding a relative relationship between layers of the 3D data extracted from the bitstream; analyzing layer allocation information regarding allocation of layers of the 3D data extracted from the bitstream; and rendering the 3D data based on the inter-layer relative information and the layer allocation information and generating a viewpoint image viewed from any viewpoint.

In addition, Method 1 shown in the table in Fig. 7 and Method 3 shown in the table in Fig. 19 may be combined and applied.

For example, a first image processing device may include an inter-layer relative information generation unit that generates inter-layer relative information regarding a relative relationship between layers of 3D data including a layer image of a color component and a layer image of an alpha component, a layer shape selection information generation unit that generates layer shape selection information regarding selection of the shape of a layer of the 3D data, and an encoding unit that generates a bitstream by encoding the 3D data and adds the inter-layer relative information and the layer shape selection information to the bitstream. For example, a first image processing method may include: generating inter-layer relative information regarding a relative relationship between layers of 3D data including a layer image of a color component and a layer image of an alpha component, by the first image processing device; generating layer shape selection information regarding selection of the shape of a layer of the 3D data by the first image processing device; and generating a bitstream by encoding the 3D data and adding the inter-layer relative information and the layer shape selection information to the bitstream, by the first image processing device. For example, a first program may cause the first image processing device to execute: generating inter-layer relative information regarding a relative relationship between layers of 3D data including a layer image of a color component and a layer image of an alpha component; generating layer shape selection information regarding selection of the shape of a layer of the 3D data; and generating a bitstream by encoding the 3D data and adding the inter-layer relative information and the layer shape selection information to the bitstream.

For example, a second image processing device may include a decoding unit that decodes a bitstream and generates 3D data including a layer image of a color component and a layer image of an alpha component, an inter-layer relative information analysis unit that analyzes inter-layer relative information regarding a relative relationship between layers of the 3D data extracted from the bitstream, a layer shape selection information analysis unit that analyzes layer shape selection information regarding selection of the shape of a layer of the 3D data extracted from the bitstream, and a viewpoint image generation unit that renders the 3D data based on the inter-layer relative information and the layer shape selection information and generates a viewpoint image viewed from any viewpoint. For example, a second image processing method may include: decoding a bitstream and generating 3D data including a layer image of a color component and a layer image of an alpha component, by the second image processing device; analyzing inter-layer relative information regarding a relative relationship between layers of the 3D data extracted from the bitstream, by the second image processing device; analyzing layer shape selection information regarding selection of the shape of a layer of the 3D data extracted from the bitstream, by the second image processing device; and rendering the 3D data based on the inter-layer relative information and the layer shape selection information and generating a viewpoint image viewed from any viewpoint, by the second image processing device. For example, a second program may cause the second image processing device to execute: decoding a bitstream and generating 3D data including a layer image of a color component and a layer image of an alpha component; analyzing inter-layer relative information regarding a relative relationship between layers of the 3D data extracted from the bitstream; analyzing layer shape selection information regarding selection of the shape of a layer of the 3D data extracted from the bitstream; and rendering the 3D data based on the inter-layer relative information and the layer shape selection information and generating a viewpoint image viewed from any viewpoint.

In addition, a plurality of methods in Method 1 shown in the table of Fig. 7, Method 2 shown in the table of Fig. 15, and Method 3 shown in the table of Fig. 19 may be appropriately combined and applied.

For example, a first image processing device may include an inter-layer relative information generation unit that generates inter-layer relative information regarding a relative relationship between layers of 3D data including a layer image of a color component and a layer image of an alpha component, a layer allocation information generation unit that generates layer allocation information regarding allocation of layers of the 3D data, a layer shape selection information generation unit that generates layer shape selection information regarding selection of the shape of a layer of the 3D data, and an encoding unit that generates a bitstream by encoding the 3D data and adds the inter-layer relative information, the layer allocation information, and the layer shape selection information to the bitstream. For example, a first image processing method may include: generating inter-layer relative information regarding a relative relationship between layers of 3D data including a layer image of a color component and a layer image of an alpha component, by the first image processing device; generating layer allocation information regarding allocation of layers of the 3D data by the first image processing device; generating layer shape selection information regarding selection of the shape of a layer of the 3D data by the first image processing device; and generating a bitstream by encoding the 3D data and adding the inter-layer relative information, the layer allocation information, and the layer shape selection information to the bitstream, by the first image processing device. For example, a first program may cause the first image processing device to execute: generating inter-layer relative information regarding a relative relationship between layers of 3D data including a layer image of a color component and a layer image of an alpha component; generating layer allocation information regarding allocation of layers of the 3D data; generating layer shape selection information regarding selection of the shape of a layer of the 3D data; and generating a bitstream by encoding the 3D data and adding the inter-layer relative information, the layer allocation information, and the layer shape selection information to the bitstream.

For example, a second image processing device may include a decoding unit that decodes a bitstream and generates 3D data including a layer image of a color component and a layer image of an alpha component, an inter-layer relative information analysis unit that analyzes inter-layer relative information regarding a relative relationship between layers of the 3D data extracted from the bitstream, a layer allocation information analysis unit that analyzes layer allocation information regarding allocation of layers of the 3D data extracted from the bitstream, a layer shape selection information analysis unit that analyzes layer shape selection information regarding selection of the shape of a layer of the 3D data extracted from the bitstream, and a viewpoint image generation unit that renders the 3D data based on the inter-layer relative information, the layer allocation information, and the layer shape selection information and generates a viewpoint image viewed from any viewpoint. For example, a second image processing method may include: decoding a bitstream and generating 3D data including a layer image of a color component and a layer image of an alpha component, by the second image processing device; analyzing inter-layer relative information regarding a relative relationship between layers of the 3D data extracted from the bitstream, by the second image processing device; analyzing layer allocation information regarding allocation of layers of the 3D data extracted from the bitstream, by the second image processing device; analyzing layer shape selection information regarding selection of the shape of a layer of the 3D data extracted from the bitstream, by the second image processing device; and rendering the 3D data based on the inter-layer relative information, the layer allocation information, and the layer shape selection information and generating a viewpoint image viewed from any viewpoint, by the second image processing device. For example, a second program may cause the second image processing device to execute: decoding a bitstream and generating 3D data including a layer image of a color component and a layer image of an alpha component; analyzing inter-layer relative information regarding a relative relationship between layers of the 3D data extracted from the bitstream; analyzing layer allocation information regarding allocation of layers of the 3D data extracted from the bitstream; analyzing layer shape selection information regarding selection of the shape of a layer of the 3D data extracted from the bitstream; and rendering the 3D data based on the inter-layer relative information, the layer allocation information, and the layer shape selection information and generating a viewpoint image viewed from any viewpoint.

### <4. First Embodiment>

### <Encoding Device>

The present technique can be applied to any device. For example, the present technique can be applied to an encoding device that encodes 3D data including a layer image of a color component and a layer image of an alpha component, and generates a bitstream. Fig. 23 is a block diagram illustrating an example of a configuration of an encoding device that is an aspect of the image processing device to which the present technique is applied. An encoding device 500 (first image processing device) illustrated in Fig. 23 is a device that generates 3D data including a layer image of a color component and a layer image of an alpha component by using a multi-viewpoint image, encodes the 3D data, and generates a bitstream thereof. Thus, the encoding device 500 can also be considered to be a 3D data generation device that generates 3D data or a bitstream generation device that generates a bitstream.

Fig. 23 illustrates main processing units, data flows, and the like, and those illustrated in Fig. 23 are not necessarily the entire configurations. That is, in the encoding device 500, a processing unit that is not illustrated as a block in Fig. 23 may exist, or processing or a data flow that is not indicated by an arrow or the like in Fig. 23 may exist.

As illustrated in Fig. 23, the encoding device 500 (first image processing device) includes a layer image generation unit 511, a layer image packing unit 512, an SEI generation unit 513, an encoding unit 514, a storage unit 515, and a transmission unit 516.

The layer image generation unit 511 executes processing related to generation of a layer image forming 3D data. For example, the layer image generation unit 511 may acquire a multi-viewpoint image supplied from the outside of the encoding device 500. Furthermore, the layer image generation unit 511 may acquire setting information regarding layer generation, which is input by, for example, a user, an application, or the like.

The setting information may include any type of information as long as the information relates to layer generation. For example, settings related to the resolution and size of a layer image may be included in the setting information. Further, a setting related to the number of layers to be generated may be included in the setting information.

Furthermore, in a case where Method 1 described above is applied, a setting related to a relative relationship between layers may be included in the setting information. For example, the setting information may include a setting related to the relative number of an alpha layer with respect to a color layer, a setting related to the relative resolution of the alpha layer with respect to the color layer, and the like.

In addition, in a case where Method 2 described above is applied, a setting related to allocation of layers may be included in the setting information. For example, the setting information may include a setting related to the allocation of an additional layer, a setting related to the allocation of the layers based on the non-equal interval allocation function, and the like.

In addition, in a case where Method 3 described above is applied, a setting related to selection of the shape of a layer may be included in the setting information. For example, the setting information may include a setting related to designation of a curvature, a setting related to whether or not the layer has a cylindrical shape, a setting related to whether or not the layer is non-planar, and the like.

The layer image generation unit 511 may generate a layer image forming 3D data by using the multi-viewpoint image based on the setting information. Furthermore, the layer image generation unit 511 may generate metadata of the layer image (also considered to be metadata of 3D data).

The metadata may have any content. For example, information indicating the resolution and size of a layer image forming 3D data generated by the layer image generation unit 511 may be included in the metadata. Furthermore, information indicating the number of layers forming the 3D data generated by the layer image generation unit 511 may be included in the metadata.

Furthermore, in a case where Method 1 described above is applied, the information regarding a relative relationship between layers of 3D data generated in the layer image generation unit 511 may be included in the metadata. For example, the metadata may include information indicating the relative number of the alpha layer with respect to the color layer, information indicating the relative resolution of the alpha layer with respect to the color layer, and the like in the 3D data generated by the layer image generation unit 511.

Furthermore, in a case where Method 2 described above is applied, the information regarding allocation of layers of 3D data generated in the layer image generation unit 511 may be included in the metadata. For example, the metadata may include information regarding the allocation of an additional layer, information regarding the allocation of the layers based on the non-equal interval allocation function, and the like in the 3D data generated by the layer image generation unit 511.

In addition, in a case where Method 3 described above is applied, information regarding selection of the shape of a layer may be included in the metadata. For example, the metadata may include information indicating the curvature of a layer, information indicating whether or not the layer has a cylindrical shape, information indicating whether or not the layer is non-planar, and the like in the 3D data generated by the layer image generation unit 511.

A method of generating the layer image (3D data) and the metadata thereof may be any method. For example, the layer image generation unit 511 may have a learning model (neural network) that receives inputs of setting information and a multi-viewpoint image, and outputs 3D data including a layer image of a color component and a layer image of an alpha component, and metadata thereof. The layer image generation unit 511 inputs the supplied setting information and multi-viewpoint image to the learning model, and causes the learning model to output a layer image and the metadata of the layer image. The layer image generation unit 511 may supply a layer image group (that is, 3D data including the layer images of the color component and the alpha component) of the color component and the alpha component, and metadata thereof, which are generated in this manner, to the layer image packing unit 512.

The layer image packing unit 512 executes processing related to packing of the layer image. For example, the layer image packing unit 512 may acquire a layer image group (that is, 3D data including the layer images of the color component and the alpha component) of the color component and the alpha component and metadata thereof which are supplied from the layer image generation unit 511. Furthermore, the layer image packing unit 512 may acquire control information regarding packing of the layer images, which is input by, for example, a user, an application, or the like.

The control information may include any type of information as long as the information relates to packing of the layer image. For example, the control information may include information for designating a packing method (for example, whether to stack layers in a spatial direction (vertical direction or horizontal direction), stack layers in the time direction, or the like).

The layer image packing unit 512 may pack a layer image group based on the supplied control information and generate a packing image that is a packed layer image group. The layer image packing unit 512 may supply the generated packing image to the encoding unit 514. Furthermore, the layer image packing unit 512 may supply the supplied metadata to the SEI generation unit 513.

The SEI generation unit 513 executes processing related to generation of an SEI. For example, the SEI generation unit 513 may acquire the metadata supplied from the layer image packing unit 512. The SEI generation unit 513 may generate the SEI based on the metadata. That is, the SEI generation unit 513 may generate the SEI including the content of the metadata. The SEI may include any type of information.

The SEI generation unit 513 may include, for example, an inter-layer relative information generation unit 521, a layer allocation information generation unit 522, and a layer shape selection information generation unit 523.

The inter-layer relative information generation unit 521 executes processing related to generation of inter-layer relative information. For example, the inter-layer relative information generation unit 521 may generate inter-layer relative information for 3D data generated by the layer image generation unit 511, based on the information regarding the relative relationship between the layers of the 3D data, which is included in the metadata supplied to the SEI generation unit 513. For example, the inter-layer relative information generation unit 521 may generate, as the inter-layer relative information, information regarding the relative number of the alpha layers with respect to the color layers, information regarding the relative resolution of the alpha layer with respect to the color layer, and the like for the 3D data.

The layer allocation information generation unit 522 executes processing related to generation of layer allocation information. For example, the layer allocation information generation unit 522 may generate layer allocation information for the 3D data based on the information regarding the allocation of layers of the 3D data generated by the layer image generation unit 511, which is included in the metadata supplied to the SEI generation unit 513. For example, the layer allocation information generation unit 522 may generate, as the layer allocation information, information regarding allocation of an additional layer, information regarding allocation of a layer based on a non-equal interval allocation function, and the like for the 3D data.

The layer shape selection information generation unit 523 executes processing related to generation of layer shape selection information. For example, the layer shape selection information generation unit 523 may generate layer shape selection information for 3D data generated by the layer image generation unit 511, based on the information regarding selection of the shape of the layer of the 3D data, which is included in the metadata supplied to the SEI generation unit 513. For example, the layer shape selection information generation unit 523 may generate, as the layer shape selection information, curvature designation information in a single direction or a plurality of directions of the layer, information indicating whether or not the layer has a cylindrical shape, information indicating whether or not the layer is non-planar, and the like for the 3D data.

As described above, the SEI generation unit 513 may generate the SEI including the inter-layer relative information, the layer allocation information, and the layer shape selection information. Of course, the SEI may include information other than these types of information. For example, the SEI may include information indicating the resolution and size of the layer image forming the 3D data generated by the layer image generation unit 511, information indicating the number of layers forming the 3D data, and the like.

The SEI generation unit 513 may supply the generated SEI to the encoding unit 514.

Note that, in the SEI generation unit 513, in a case where Method 1 described above is not applied, the inter-layer relative information generation unit 521 may be omitted. Furthermore, in a case where Method 2 described above is not applied, the layer allocation information generation unit 522 may be omitted. Furthermore, in a case where Method 3 described above is not applied, the layer shape selection information generation unit 523 may be omitted.

The encoding unit 514 executes processing related to encoding of 3D data. For example, the encoding unit 514 may acquire the packing image supplied from the layer image packing unit 512. The encoding unit 514 may acquire the SEI supplied from the SEI generation unit 513. The encoding unit 514 may encode the acquired packing image and generate a bitstream that is the encoded data. This encoding method may be any method. For example, the encoding unit 514 may encode the packing image by using a predetermined 2D codec. Furthermore, the encoding unit 514 may add the acquired SEI to the bitstream. The encoding unit 514 may supply, to the storage unit 515, the bitstream which is generated in this manner and to which the SEI is added. Furthermore, the encoding unit 514 may supply the bitstream to the transmission unit 516.

The storage unit 515 includes, for example, a storage medium such as a hard disk or a semiconductor memory, and executes processing related to storing and reading of information using the storage medium. For example, the storage unit 515 may acquire the bitstream supplied from the encoding unit 514 and store the bitstream in the storage medium. The storage unit 515 may read a bitstream stored in the storage medium at a predetermined timing or based on a request from the outside (for example, the transmission unit 516 or the like), and supply the bitstream to the transmission unit 516. Furthermore, the storage unit 515 may include a removable medium and a drive thereof, and store the acquired bitstream in the removable medium attached to the drive. In that case, the removable medium can be removed from the drive. That is, the bitstream may be output to the outside of the encoding device 500 in a state of being stored in the removable medium.

The transmission unit 516 includes a communication device that communicates with another device, and executes processing related to transmission of information and the like by using the communication device. For example, the transmission unit 516 may acquire the bitstream supplied from the encoding unit 514. Furthermore, the transmission unit 516 may acquire the bitstream read from the storage unit 515. The transmission unit 516 may transmit the acquired bitstream to another device by using the above-described communication device.

In such an encoding device 500, the present technique described above in <3. Extension Regarding Layer> may be applied. For example, Method 1 may be applied in the encoding device 500. In this case, the inter-layer relative information generation unit 521 may generate the inter-layer relative information regarding the relative relationship between the layers of the 3D data including the layer image of the color component and the layer image of the alpha component. Furthermore, the encoding unit 514 may generate a bitstream by encoding the 3D data, and add the inter-layer relative information to the bitstream.

In this manner, for example, even though the relative relationship between the layers is optimized according to the content or the like, the decoder can easily recognize the relative relationship based on the inter-layer relative information. Thus, the encoding device 500 can suppress reduction in the quality of the rendering image.

In addition, Method 2 may be applied to the encoding device 500. In this case, the layer allocation information generation unit 522 may generate the layer allocation information regarding the allocation of the layers of the 3D data including the layer image of the color component and the layer image of the alpha component. Furthermore, the encoding unit 514 may generate a bitstream by encoding the 3D data, and add the layer allocation information to the bitstream.

In this manner, the decoder can easily allocate each layer at any position based on the layer allocation information. Thus, the encoding device 500 can allocate the layers at non-equal intervals while suppressing an unnecessary increase in the data amount, for example. As a result, the encoding device 500 can optimize the layer allocation according to the content or the like, for example. Thus, the encoding device 500 can suppress the reduction in the quality of the rendering image while suppressing the unnecessary increase in the data amount.

In addition, Method 3 may be applied to the encoding device 500. In this case, the layer shape selection information generation unit 523 may generate the layer shape selection information regarding selection of the shape of the layer of the 3D data including the layer image of the color component and the layer image of the alpha component. Furthermore, the encoding unit 514 may generate a bitstream by encoding the 3D data, and add the layer shape selection information to the bitstream.

In this manner, the encoding device 500 can select the shape of the layer. For example, the encoding device 500 can select and apply an optimum method for content from among the MPI, the MCI, and the MSI. As a result, the encoding device 500 can suppress the reduction in the quality of the rendering image while suppressing an unnecessary increase in the load of processing such as encoding, decoding, and reproduction.

### <Flow of Encoding Processing>

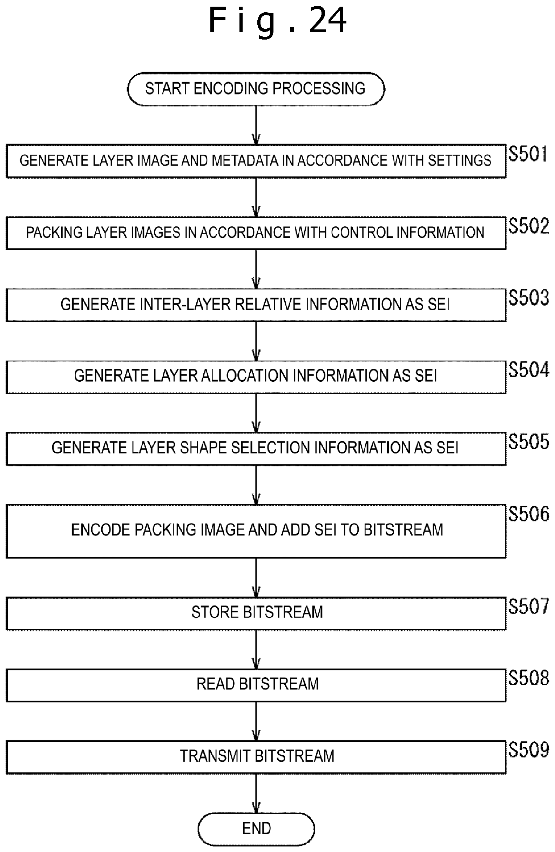

An example of a flow of encoding processing executed by the encoding device 500 will be described with reference to the flowchart of Fig. 24.

When the encoding processing is started, in Step S501, the layer image generation unit 511 generates a layer image and metadata thereof by using the multi-viewpoint image in accordance with the input setting regarding layer generation.

In Step S502, the layer image packing unit 512 packs the layer image generated in Step S501 in accordance with the input control information, and generates a packing image.

In Step S503, the inter-layer relative information generation unit 521 generates the inter-layer relative information as the SEI, by using the metadata generated in Step S501.

In Step S504, the layer allocation information generation unit 522 generates the layer allocation information as the SEI, by using the metadata generated in Step S501.

In Step S505, the layer shape selection information generation unit 523 generates the layer shape selection information as the SEI, by using the metadata generated in Step S501.

In Step S506, the encoding unit 514 encodes the packing image generated in Step S502 and generates a bitstream thereof. Furthermore, the encoding unit 514 adds the SEI generated in each of the processes from Step S503 to Step S505 to the bitstream.

In Step S507, the storage unit 515 stores the bitstream which is generated in Step S506 and to which the SEI is added.

In Step S508, the storage unit 515 reads the bitstream stored in Step S507.

In Step S509, the transmission unit 516 transmits the bitstream to which the SEI is added, and which is generated in Step S506, or the bitstream read from the storage unit 515 in Step S508.

When the process in Step S509 ends, the encoding processing ends.

By executing the processing operations in this manner, the encoding device 500 can suppress reduction in the quality of the rendering image.

Note that, in a case where Method 1 described above is not applied, the process of Step S503 may be skipped (omitted). In a case where Method 2 described above is not applied, the process of Step S504 may be skipped (omitted). In a case where Method 3 described above is not applied, the process of Step S505 may be skipped (omitted).

### <5. Second Embodiment>

### <Decoding Device>

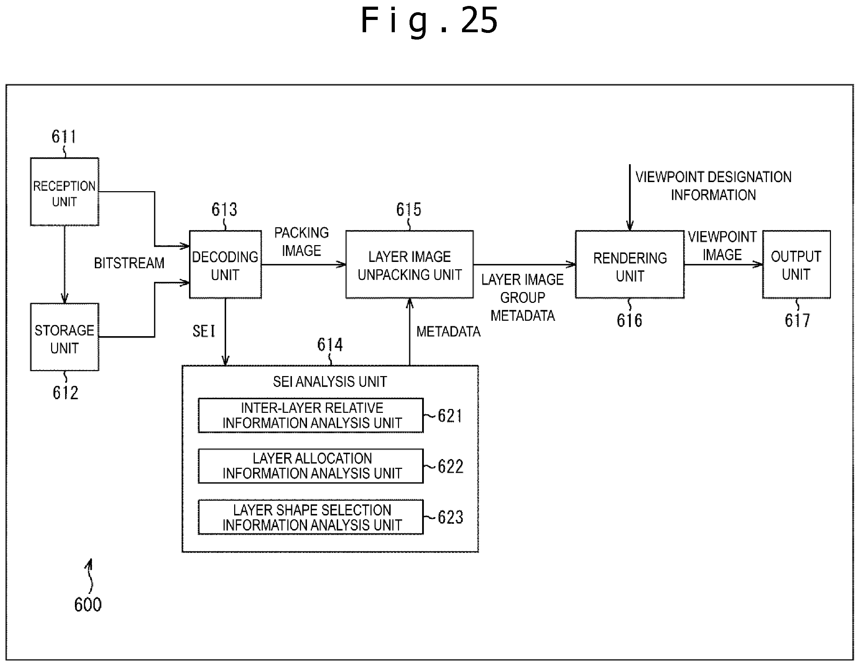

The present technique can be applied to a decoding device that decodes a bitstream obtained by encoding 3D data formed by a layer image of a color component and a layer image of an alpha component. Fig. 25 is a block diagram illustrating an example of a configuration of the decoding device that is an aspect of the image processing device to which the present technique is applied. A decoding device 600 (second image processing device) illustrated in Fig. 25 is, for example, a device that decodes a bitstream generated by the encoding device 500 (Fig. 23), generates (reconstructs) 3D data including a layer image of a color component and a layer image of an alpha component, generates a viewpoint image by rendering the 3D data at a desired viewpoint, and outputs the viewpoint image.

Fig. 25 illustrates main processing units, data flows, and the like, and those illustrated in Fig. 25 are not necessarily the entire configurations. That is, in the decoding device 600, a processing unit that is not illustrated as a block in Fig. 25 may exist, or processing or a data flow that is not indicated by an arrow or the like in Fig. 25 may exist.

As illustrated in Fig. 25, the decoding device 600 (second image processing device) includes a reception unit 611, a storage unit 612, a decoding unit 613, an SEI analysis unit 614, a layer image unpacking unit 615, a rendering unit 616, and an output unit 617.

The reception unit 611 has a communication function of communicating with another device, and executes processing related to reception of information and the like by using the communication function. For example, the reception unit 611 may acquire a bitstream transmitted from (the transmission unit 516 of) the encoding device 500. The reception unit 611 may supply the received bitstream to the storage unit 612. Furthermore, the reception unit 611 may supply the received bitstream to the decoding unit 613.

The storage unit 612 includes, for example, a storage medium such as a hard disk or a semiconductor memory, and executes processing related to storing and reading of information using the storage medium. For example, the storage unit 612 may acquire the bitstream supplied from the reception unit 611 and store the bitstream in the storage medium. The storage unit 612 may read a bitstream stored in the storage medium at a predetermined timing or based on a request from the outside (for example, the decoding unit 613 or the like), and supply the bitstream to the decoding unit 613. Furthermore, the storage unit 612 may include a removable medium and a drive thereof, read a bitstream stored in the removable medium attached to the drive at a predetermined timing or based on a request from the outside (for example, the decoding unit 613 or the like), and supply the bitstream to the decoding unit 613. That is, the bitstream may be supplied from the encoding device 500 or the like to the decoding device 600 in a state of being stored in the removable medium.

The decoding unit 613 executes processing related to decoding of a bitstream. For example, the decoding unit 613 may acquire the bitstream supplied from the reception unit 611 or the storage unit 612. The decoding unit 613 may extract the SEI added to the acquired bitstream and supply the SEI to the SEI analysis unit 614. Furthermore, the decoding unit 613 may decode the acquired bitstream, and generate (reconstruct) a packing image of layers of 3D data including a layer image of a color component and a layer image of an alpha component. Note that any method may be used as the decoding method. For example, the decoding unit 613 may decode the bitstream by using a predetermined 2D codec. The decoding unit 613 may supply the packing image generated (reconstructed) as described above to the layer image unpacking unit 615.

The SEI analysis unit 614 executes processing related to analysis of the SEI. For example, the SEI analysis unit 614 may acquire the SEI supplied from the decoding unit 613. The SEI may include any type of information. For example, the SEI may include inter-layer relative information, layer allocation information, and layer shape selection information. Of course, this SEI may include information other than these types of information. For example, the SEI may include information indicating the resolution and size of the layer image forming the 3D data, or information indicating the number of layers forming the 3D data.

The SEI analysis unit 614 may analyze the SEI and generate the metadata of the 3D data according to the analysis result. That is, the SEI analysis unit 614 may generate metadata reflecting the content of the acquired SEI.

The SEI analysis unit 614 may include, for example, an inter-layer relative information analysis unit 621, a layer allocation information analysis unit 622, and a layer shape selection information analysis unit 623.

The inter-layer relative information analysis unit 621 executes processing related to analysis of the inter-layer relative information included in the SEI. For example, the inter-layer relative information analysis unit 621 may analyze the inter-layer relative information included in the SEI supplied from the decoding unit 613, and generate the information regarding the relative relationship between the layers of the 3D data, as the metadata of the 3D data, according to the analysis result. For example, in this manner, the inter-layer relative information analysis unit 621 may generate, as the metadata of the 3D data, information indicating the relative number of the alpha layers with respect to the color layers, information indicating the relative resolution of the alpha layer with respect to the color layer, and the like in the 3D data.

The layer allocation information analysis unit 622 executes processing related to analysis of the layer allocation information included in the SEI. For example, the layer allocation information analysis unit 622 may analyze the layer allocation information included in the SEI supplied from the decoding unit 613, and generate the information regarding the allocation of the layers of the 3D data, as the metadata of the 3D data, according to the analysis result. For example, in this manner, the layer allocation information analysis unit 622 may generate, as the metadata of the 3D data, information regarding allocation of an additional layer, information regarding the allocation of the layer based on the non-equal interval allocation function, and the like in the 3D data.

The layer shape selection information analysis unit 623 executes processing related to analysis of the layer shape selection information included in the SEI. For example, the layer shape selection information analysis unit 623 may analyze the layer shape selection information included in the SEI supplied from the decoding unit 613, and generate the information regarding selection of the shape of the layer of the 3D data, as the metadata of the 3D data, according to the analysis result. For example, in this manner, the layer shape selection information analysis unit 623 may generate, as the metadata of the 3D data, information indicating the curvature of the layer, information indicating whether or not the layer has a cylindrical shape, information indicating whether or not the layer is non-planar, and the like in the 3D data.

The SEI analysis unit 614 may supply the metadata generated as described above to the layer image unpacking unit 615.

The layer image unpacking unit 615 executes processing related to unpacking of the packing image. For example, the layer image unpacking unit 615 may acquire the packing image supplied from the decoding unit 613. Furthermore, the layer image unpacking unit 615 may acquire the metadata supplied from the SEI analysis unit 614. The layer image unpacking unit 615 may unpack the acquired packing image in accordance with the control information included in the acquired metadata and generate an unpacked layer image group (a layer image group of the color component and a layer image group of the alpha component). The layer image unpacking unit 615 may allocate the layer image group based on the information included in the metadata, and generate 3D data including the layer image of the color component and the layer image of the alpha component. The layer image unpacking unit 615 may supply the generated 3D data (layer image group) and the metadata thereof to the rendering unit 616.

The rendering unit 616 executes processing related to rendering of 3D data. For example, the rendering unit 616 may acquire 3D data (layer image group) and metadata thereof, which are supplied from the layer image unpacking unit 615. Furthermore, the rendering unit 616 may acquire viewpoint position information input by, for example, a user, an application, or the like. The viewpoint position information is information indicating the position, posture, and the like of the viewpoint when 3D data is rendered. The rendering unit 616 may render the 3D data based on the viewpoint position information and the metadata. That is, the rendering unit 616 may ascertain the content of the 3D data based on the metadata, execute rendering at a viewpoint indicated by the viewpoint position information, and generate the viewpoint image (rendering image). That is, the rendering unit 616 can also be considered to be a viewpoint image generation unit that generates a viewpoint image. The rendering unit 616 may supply the generated viewpoint image to the output unit 617.

The output unit 617 executes processing related to the output of the viewpoint image. For example, the output unit 617 may include a display device such as a monitor and display the viewpoint image supplied from the rendering unit 616 by using the display device. The output unit 617 may include a communication device that communicates with another device, and may transmit the viewpoint image supplied from the rendering unit 616 to the outside of the decoding device 600 (for example, another device) by using the communication device. The output unit 617 may include a removable medium and a drive thereof, and may store the viewpoint image supplied from the rendering unit 616 in the removable medium attached to the drive, via the drive. The removable medium is configured to be detachable from the drive.

In such a decoding device 600, the present technique described above in <3. Extension Regarding Layer> may be applied. For example, Method 1 may be applied in the decoding device 600. In this case, the decoding unit 613 may decode the bitstream and generate 3D data including the layer image of the color component and the layer image of the alpha component. The inter-layer relative information analysis unit 621 may analyze the inter-layer relative information regarding the relative relationship between the layers of the 3D data extracted from the bitstream. The rendering unit 616 may render the 3D data based on the inter-layer relative information and generate a viewpoint image viewed from any viewpoint.

In this manner, for example, even though the encoder optimizes the relative relationship between the layers according to the content or the like, the decoding device 600 can easily recognize the relative relationship based on the inter-layer relative information. Thus, the decoding device 600 can suppress reduction in the quality of the rendering image.

In addition, Method 2 may be applied in the decoding device 600. In this case, the decoding unit 613 may decode the bitstream and generate 3D data including the layer image of the color component and the layer image of the alpha component. The inter-layer relative information analysis unit 621 may analyze the layer allocation information regarding the allocation of the layers of the 3D data extracted from the bitstream. The rendering unit 616 may render the 3D data based on the layer allocation information and generate a viewpoint image viewed from any viewpoint.

In this manner, the decoding device 600 can easily allocate each layer at any position based on the layer allocation information. Thus, the decoding device 600 can allocate the layers at non-equal intervals while suppressing an unnecessary increase in the data amount, for example. As a result, the decoding device 600 can optimize the layer allocation according to the content or the like, for example. Thus, the decoding device 600 can suppress the reduction in the quality of the rendering image while suppressing the unnecessary increase in the data amount.

In addition, Method 3 may be applied in the decoding device 600. In this case, the decoding unit 613 may decode the bitstream and generate 3D data including the layer image of the color component and the layer image of the alpha component. The inter-layer relative information analysis unit 621 may analyze the layer shape selection information regarding selection of the shape of the layer of the 3D data extracted from the bitstream. The rendering unit 616 may render the 3D data based on the layer shape selection information and generate a viewpoint image viewed from any viewpoint.

In this manner, the encoder can select the shape of the layer. For example, the encoder can select and apply an optimum method for content from among the MPI, the MCI, and the MSI. The decoding device 600 can easily recognize the selection result. As a result, the decoding device 600 can suppress the reduction in the quality of the rendering image while suppressing an unnecessary increase in the load of processing such as encoding, decoding, and reproduction.

### <Flow of Decoding Processing>

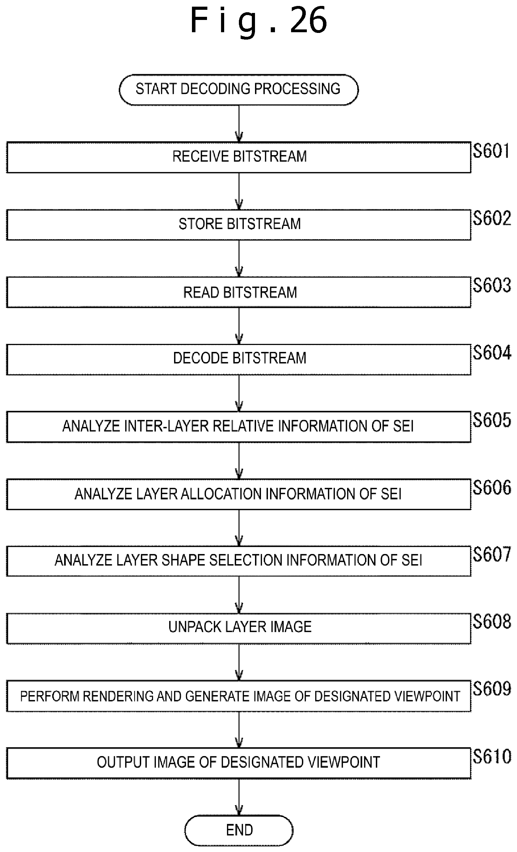

An example of a flow of decoding processing executed by the decoding device 600 will be described with reference to the flowchart of Fig. 26.

When the decoding processing is started, the reception unit 611 receives a bitstream in Step S601.

In Step S602, the storage unit 612 stores the bitstream.

In Step S603, the storage unit 612 reads the bitstream.

In Step S604, the decoding unit 613 decodes the bitstream and generates a packing image.

In Step S605, the inter-layer relative information analysis unit 621 of the SEI analysis unit 614 analyzes the inter-layer relative information included in the SEI extracted from the bitstream, and generates information regarding the relative relationship between the layers of the 3D data, as metadata of the 3D data, according to the analysis result.

In Step S606, the layer allocation information analysis unit 622 of the SEI analysis unit 614 analyzes the layer allocation information included in the SEI extracted from the bitstream, and generates information regarding the allocation of the layers of the 3D data, as metadata of the 3D data, according to the analysis result.

In Step S607, the layer shape selection information analysis unit 623 of the SEI analysis unit 614 analyzes the layer shape selection information included in the SEI extracted from the bitstream, and generates information regarding selection of the shape of the layer of the 3D data, as metadata of the 3D data, according to the analysis result.

In Step S608, the layer image unpacking unit 615 unpacks the packing image generated in Step S604, and generates a layer image group of the color component and a layer image group of the alpha component. The layer image unpacking unit 615 allocates the layer image groups based on the information included in the metadata generated in each of the processes of Steps S605 to S607, and generates 3D data including the layer image of the color component and the layer image of the alpha component.

In Step S609, the rendering unit 616 renders the 3D data at the viewpoint indicated by the viewpoint position information based on the metadata generated in each of the processes of Steps S605 to S607, and generates a viewpoint image thereof.

In Step S610, the output unit 617 outputs the viewpoint image.

When the process of Step S610 ends, the decoding processing ends.

By executing the processing in this manner, the decoding device 600 can suppress the reduction in the quality of the rendering image.

Note that, in a case where Method 1 described above is not applied, the process of Step S605 may be skipped (omitted). In a case where Method 2 described above is not applied, the process of Step S606 may be skipped (omitted). In a case where Method 3 described above is not applied, the process of Step S607 may be skipped (omitted).

### <6. Supplementary Notes>

### <3D Data >

In the above description, as the 3D data, an MPI, an MCI, an MSI, NeX using the MPI, the MCI, or the MSI, and the like have been described as examples, but the present technique is not limited to these examples, and can be applied to any type of 3D data including the layer image of the color component and the layer image of the alpha component.

### <Computer>

The above-described series of processing operations can be executed by hardware or software. In a case where the series of processing operations is executed by software, a program forming the software is installed on a computer (also referred to as an information processing apparatus or an image processing device). Here, the computer includes a computer embedded in dedicated hardware, and, for example, a general-purpose computer that can execute various functions by installing various programs.

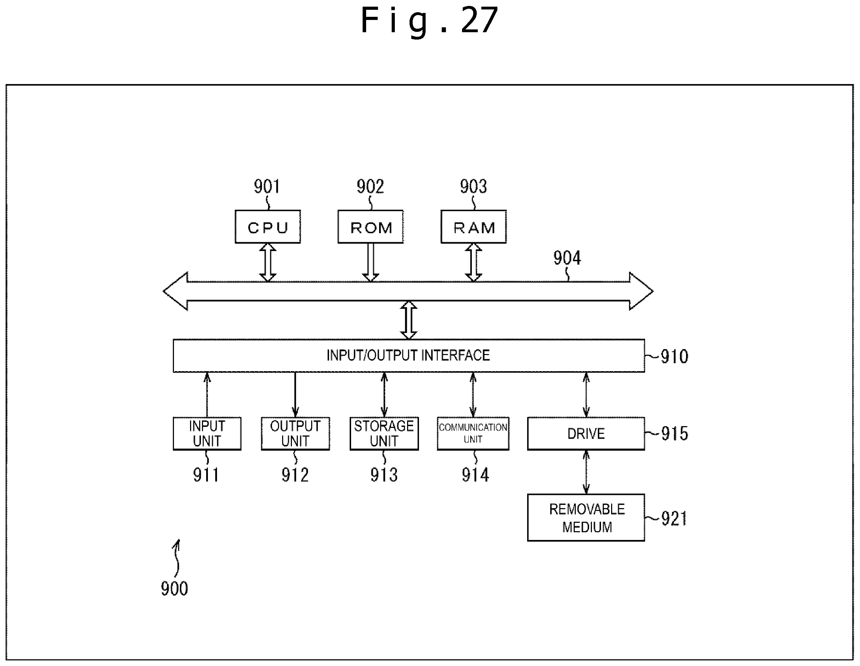

Fig. 27 is a block diagram illustrating a configuration example of hardware for a computer that executes the above-described series of processing operations in a program.

In the computer 900 illustrated in Fig. 27, a central processing unit (CPU) 901, a read only memory (ROM) 902, and a random access memory (RAM) 903 are connected to each other via a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921 such as a magnetic disk, an optical disc, a magneto-optical disc, or a semiconductor memory.

In the computer configured as described above, for example, the CPU 901 loads a program stored in the storage unit 913 into the RAM 903 via the input/output interface 910 and the bus 904 and executes the program, thereby performing the series of processing operations described above. The RAM 903 also appropriately stores data necessary for the CPU 901 to perform various processing operations.

The program executed by the computer can be applied by being recorded on the removable medium 921 serving as a package medium, for example. In this case, the program can be installed on the storage unit 913 via the input/output interface 910 by loading the removable medium 921 to the drive 915.

In addition, the program can also be provided via a wired or wireless transmission medium, such as a local area network, the Internet, or digital satellite broadcasting. In this case, the program can be received by the communication unit 914 and installed on the storage unit 913.

In addition, the program can be installed in advance on the ROM 902 or the storage unit 913.

### <Target to which Present Technique Can Be Applied>

The present technique can be applied to any encoding/decoding method.

In addition, the present technique can be applied to any form. For example, the present technique can be applied to various electronic devices.

In addition, the present technique can also be implemented as part of a configuration of a device, for example, a processor as system large scale integration (LSI) or the like (for example, video processor), a module using a plurality of processors or the like (for example, video module), a unit using a plurality of modules or the like (for example, video unit), a set including the unit to which other functions are added, or the like (for example, a video set).

Further, for example, the present technique can also be applied to a network system including a plurality of devices. For example, the present technique can also be implemented as cloud computing in which processing is shared and performed collaboratively by a plurality of devices via a network. For example, the present technique may be implemented in a cloud service that provides a service related to images (moving images) to any terminal such as a computer, audio visual (AV) equipment, a portable information processing terminal, and an Internet of Things (IoT) device.

Note that, in the present specification, a system means a set of a plurality of components (devices, modules (parts), and the like), and it does not matter whether all the components are in the same housing. Therefore, the system refers to both a plurality of devices housed in separate housings and connected via a network and one device in which a plurality of modules are housed in one housing.

### <Fields and Applications to which Present Technique Can Be Applied>

A system, a device, a processing unit, and the like to which the present technique is applied can be used in any field, for example, traffic, medical care, crime prevention, agriculture, livestock industry, mining, beauty care, factories, home appliances, weather, natural surveillance, and the like. In addition, the application thereof is also freely selected.

For example, the present technique can be applied to a system or a device provided for providing content for appreciation or the like. Furthermore, for example, the present technique can also be applied to systems and devices provided for traffic, such as traffic condition supervision and automatic driving control. Furthermore, for example, the present technique can also be applied to a system or a device provided for security. Furthermore, for example, the present technique can be applied to a system or a device provided for automatic control of a machine or the like. Furthermore, for example, the present technique can also be applied to systems and devices used for agriculture and livestock industry. Furthermore, the present technique can also be applied to systems and devices that monitor natural states such as volcanoes, forests, and oceans, wildlife, and the like. Furthermore, for example, the present technique can also be applied to systems and devices provided for sports.

### <Others>

Note that, in the present specification, a "flag" is information for identifying a plurality of states, and includes not only information used for identifying two states of true (1) and false (0) but also information capable of identifying three or more states. Thus, a value that can be taken by such a "flag" may be, for example, two values of 1 and 0, or three or more values. That is, the number of bits constituting the "flag" is freely selected, and may be one bit or multiple bits. In addition, since identification information (including a flag) is assumed to be not only a form in which the identification information is included in a bitstream but also a form in which difference information of the identification information with respect to information serving as a certain reference is included in the bitstream, in the present specification, "flag" and "identification information" include not only the information itself but also difference information with respect to the information serving as the reference.

Furthermore, various types of information (metadata and the like) regarding the picked-up image may be transmitted or recorded in any form as long as the various types of information are associated with the picked-up image. Here, the term "associate" means that, for example, while one piece of data is processed, the other piece of data can be used (linked). That is, pieces of data associated with each other may be collected as one piece of data or may be handled as individual pieces of data. For example, information associated with encoded data (image) may be transmitted on a transmission path different from that of the encoded data (image). Further, for example, the information associated with the encoded data (image) may be recorded in a recording medium different from that for the encoded data (image) (or in a different recording area of the same recording medium). Note that the "association" may be applied to a part of data, instead of entire data. For example, an image and information corresponding to the image may be associated with each other in any unit such as a plurality of frames, one frame, or a part of a frame.

Note that, in the present specification, terms such as "synthesize", "multiplex", "add", "integrate", "include", "store", "put in", "plug in", and "insert" mean that a plurality of things are put together into one, for example, encoded data and metadata are put together into one piece of data, and mean one method of the above-described "association".

In addition, embodiments of the present technique are not limited to the above-described embodiments, and various modifications can be made without departing from the gist of the present technique.

For example, a configuration described as one device (or processing unit) may be divided and configured as a plurality of devices (or processing units). Conversely, the configurations described above as a plurality of devices (or processing units) may be integrated into one device (or processing unit). In addition, it is needless to say that a configuration other than the above-described configuration may be added to the configuration of each device (or each processing unit). Furthermore, when the configuration and operation as the entire system are substantially the same, a part of the configuration of a certain device (or processing unit) may be included in the configuration of another device (or another processing unit).

In addition, for example, the above-described program can be executed by any device. In the case above, the device includes the necessary function (functional block or the like) and can obtain the necessary information.

In addition, for example, each step of one flowchart can be performed by one device or performed by multiple devices in a distributed manner. Further, when a single step includes multiple processing operations, the multiple processing operations may be performed by a single device or may be performed by multiple devices in a distributed manner. In other words, the plurality of processing operations included in one step can be executed as processing operations of a plurality of steps. Conversely, the processing operations described as a plurality of steps can collectively be executed as one step.

In addition, for example, the program executed by a computer may be configured such that the processing operations of the steps describing the program are performed in time series in the order described in the present specification, performed in parallel, or in an individual manner at necessary timing such as when being called. That is, the processing of each step may be executed in an order different from the above-described order as long as no contradiction occurs. Further, the processing operations of the steps describing the program may be executed in parallel with the processing operations of another program or may be executed in combination with the processing operations of another program.

In addition, for example, a plurality of techniques related to the present technique can each be implemented independently in a single component as long as no contradiction occurs. Of course, any of the plurality of present techniques can also be implemented in combination. For example, a part or all of the present techniques described in any of the embodiments can be implemented in combination with a part or all of the present techniques described in another embodiment. Further, a part or all of any of the present techniques described above can be implemented in combination with another technique that is not described above.

Note that the present technique may adopt configurations as described below.
(1) An image processing device including:
   an inter-layer relative information generation unit configured to generate inter-layer relative information regarding a relative relationship between layers of 3D data including a layer image of a color component and a layer image of an alpha component; and
   an encoding unit configured to generate a bitstream by encoding the 3D data, and adds the inter-layer relative information to the bitstream.
(2) The image processing device described in (1), in which
   the inter-layer relative information includes information regarding the relative number of layers of the alpha component with respect to layers of the color component.
(3) The image processing device described in (1) or (2), in which
   the inter-layer relative information includes information regarding a relative resolution of a layer of the alpha component with respect to a layer of the color component.
(4) An image processing method including:
   generating inter-layer relative information regarding a relative relationship between layers of 3D data including a layer image of a color component and a layer image of an alpha component; and
   generating a bitstream by encoding the 3D data, and adding the inter-layer relative information to the bitstream.
(5) A program for causing a computer to execute processing including:
   generating inter-layer relative information regarding a relative relationship between layers of 3D data including a layer image of a color component and a layer image of an alpha component; and
   generating a bitstream by encoding the 3D data, and adding the inter-layer relative information to the bitstream.
(11) An image processing device including:
   a layer allocation information generation unit configured to generate layer allocation information regarding allocation of layers of 3D data including a layer image of a color component and a layer image of an alpha component; and
   an encoding unit configured to generate a bitstream by encoding the 3D data, and add the layer allocation information to the bitstream.
(12) The image processing device described in (11), in which
   the layer allocation information includes information regarding allocation of some of the layers of the 3D data.
(13) The image processing device described in (12), in which
   the information regarding the allocation of the some of the layers includes information indicating positions of the some of the layers in a depth direction.
(14) The image processing device described in (13), in which
   the information regarding the allocation of the some of the layers includes information indicating the number of the some of the layers.
(15) The image processing device described in any of (11) to (14), in which
   the layer allocation information includes information regarding allocation of the layers of the 3D data based on a non-equal interval allocation function.
(16) The image processing device described in (15), in which
   the information regarding the allocation based on the non-equal interval allocation function includes information indicating whether or not the layers are allocated based on the non-equal interval allocation function.
(17) The image processing device described in (16), in which
   the information regarding the allocation based on the non-equal interval allocation function includes information for designating a mode of an allocation method of the layers.
(18) The image processing device described in (15), in which
   the information regarding the allocation based on the non-equal interval allocation function includes information indicating whether or not the layers are allocated in an inversely proportional pattern.
(19) The image processing device described in (18), in which
   the information regarding the allocation based on the non-equal interval allocation function includes information indicating whether or not the layers are allocated in a nonlinear pattern.
(20) The image processing device described in (19), in which
   the information regarding the allocation based on the non-equal interval allocation function includes information indicating whether or not an interval between the layers is not explicitly indicated.
(21) An image processing method including:
   generating layer allocation information regarding allocation of layers of 3D data including a layer image of a color component and a layer image of an alpha component; and
   generating a bitstream by encoding the 3D data, and adding the layer allocation information to the bitstream.
(22) A program for causing a computer to execute processing including:
   generating layer allocation information regarding allocation of layers of 3D data including a layer image of a color component and a layer image of an alpha component; and
   generating a bitstream by encoding the 3D data, and adding the layer allocation information to the bitstream.
(31) An image processing device including:
   a layer shape selection information generation unit configured to generate layer shape selection information regarding selection of a shape of a layer of 3D data including a layer image of a color component and a layer image of an alpha component; and
   an encoding unit configured to generate a bitstream by encoding the 3D data, and add the layer shape selection information to the bitstream.
(32) The image processing device described in (31), in which
   the layer shape selection information includes curvature designation information for designating a curvature of the layer in a single direction and information indicating whether or not the layer has a cylindrical shape.
(33) The image processing device described in (31), in which
   the layer shape selection information includes information indicating whether or not the layer is non-planar, curvature designation information for designating a curvature of the layer in a single direction, and information indicating whether or not the layer has a cylindrical shape.
(34) The image processing device described in (31), in which
   the layer shape selection information includes curvature designation information for designating curvatures of the layer in a plurality of directions.
(35) The image processing device described in (31), in which
   the layer shape selection information includes information indicating whether or not the layer is non-planar and curvature designation information for designating curvatures of the layer in a plurality of directions.
(36) The image processing device described in (31), in which
   the layer shape selection information includes information indicating whether or not the layer is non-planar, information indicating whether or not the layer has a cylindrical shape, and curvature designation information for designating curvatures of the layer in a plurality of directions.
(37) An image processing method including:
   generating layer shape selection information regarding selection of the shape of a layer of 3D data including a layer image of a color component and a layer image of an alpha component; and
   generating a bitstream by encoding the 3D data, and adding the layer shape selection information to the bitstream.
(38) A program for causing a computer to execute processing including:
   generating layer shape selection information regarding selection of the shape of a layer of 3D data including a layer image of a color component and a layer image of an alpha component; and
   generating a bitstream by encoding the 3D data, and adding the layer shape selection information to the bitstream.
(41) An image processing device including:
   a decoding unit configured to decode a bitstream and generate 3D data including a layer image of a color component and a layer image of an alpha component;
   an inter-layer relative information analysis unit configured to analyze inter-layer relative information regarding a relative relationship between layers of the 3D data extracted from the bitstream; and
   a viewpoint image generation unit configured to render the 3D data based on the inter-layer relative information and generates a viewpoint image viewed from any viewpoint.
(42) The image processing device described in (41), in which
   the inter-layer relative information includes information regarding the relative number of layers of the alpha component with respect to layers of the color component.
(43) The image processing device described in (41) or (42), in which
   the inter-layer relative information includes information regarding a relative resolution of a layer of the alpha component with respect to a layer of the color component.
(44) An image processing method including:
   decoding a bitstream and generating 3D data including a layer image of a color component and a layer image of an alpha component;
   analyzing inter-layer relative information regarding a relative relationship between layers of the 3D data extracted from the bitstream; and
   rendering the 3D data based on the inter-layer relative information and generating a viewpoint image viewed from any viewpoint.
(45) A program for causing a computer to execute processing including:
   decoding a bitstream and generating 3D data including a layer image of a color component and a layer image of an alpha component;
   analyzing inter-layer relative information regarding a relative relationship between layers of the 3D data extracted from the bitstream; and
   rendering the 3D data based on the inter-layer relative information and generating a viewpoint image viewed from any viewpoint.
(51) An image processing device including:
   a decoding unit configured to decode a bitstream and generate 3D data including a layer image of a color component and a layer image of an alpha component;
   a layer allocation information analysis unit configured to analyze layer allocation information regarding allocation of layers of the 3D data extracted from the bitstream; and
   a viewpoint image generation unit configured to render the 3D data based on the layer allocation information and generate a viewpoint image viewed from any viewpoint.
(52) The image processing device described in (51), in which
   the layer allocation information includes information regarding allocation of some of the layers of the 3D data.
(53) The image processing device described in (52), in which
   the information regarding the allocation of the some of the layers includes information indicating positions of the some of the layers in a depth direction.
(54) The image processing device described in (53), in which
   the information regarding the allocation of the some of the layers includes information indicating the number of the some of the layers.
(55) The image processing device described in any of (51) to (54), in which
   the layer allocation information includes information regarding allocation of the layers of the 3D data based on a non-equal interval allocation function.
(56) The image processing device described in (55), in which
   the information regarding the allocation based on the non-equal interval allocation function includes information indicating whether or not the layers are allocated based on the non-equal interval allocation function.
(57) The image processing device described in (56), in which
   the information regarding the allocation based on the non-equal interval allocation function includes information for designating a mode of an allocation method of the layers.
(58) The image processing device described in (55), in which
   the information regarding the allocation based on the non-equal interval allocation function includes information indicating whether or not the layers are allocated in an inversely proportional pattern.
(59) The image processing device described in (58), in which
   the information regarding the allocation based on the non-equal interval allocation function includes information indicating whether or not the layers are allocated in a nonlinear pattern.
(60) The image processing device described in (59), in which
   the information regarding the allocation based on the non-equal interval allocation function includes information indicating whether or not an interval between the layers is not explicitly indicated.
(61) An image processing method including:
   decoding a bitstream and generating 3D data including a layer image of a color component and a layer image of an alpha component;
   analyzing layer allocation information regarding allocation of layers of the 3D data extracted from the bitstream; and
   rendering the 3D data based on the layer allocation information and generating a viewpoint image viewed from any viewpoint.
(62) A program for causing a computer to execute processing including:
   decoding a bitstream and generating 3D data including a layer image of a color component and a layer image of an alpha component;
   analyzing layer allocation information regarding allocation of layers of the 3D data extracted from the bitstream; and
   rendering the 3D data based on the layer allocation information and generating a viewpoint image viewed from any viewpoint.
(71) An image processing device including:
   a decoding unit configured to decode a bitstream and generate 3D data including a layer image of a color component and a layer image of an alpha component;
   a layer shape selection information analysis unit configured to analyze layer shape selection information regarding selection of a shape of a layer of the 3D data extracted from the bitstream; and
   a viewpoint image generation unit configured to render the 3D data based on the layer shape selection information and generate a viewpoint image viewed from any viewpoint.
(72) The image processing device described in (71), in which
   the layer shape selection information includes curvature designation information for designating a curvature of the layer in a single direction and information indicating whether or not the layer has a cylindrical shape.
(73) The image processing device described in (71), in which
   the layer shape selection information includes information indicating whether or not the layer is non-planar, curvature designation information for designating a curvature of the layer in a single direction, and information indicating whether or not the layer has a cylindrical shape.
(74) The image processing device described in (71), in which
   the layer shape selection information includes curvature designation information for designating curvatures of the layer in a plurality of directions.
(75) The image processing device described in (71), in which
   the layer shape selection information includes information indicating whether or not the layer is non-planar and curvature designation information for designating curvatures of the layer in a plurality of directions.
(76) The image processing device described in (71), in which
   the layer shape selection information includes information indicating whether or not the layer is non-planar, information indicating whether or not the layer has a cylindrical shape, and curvature designation information for designating curvatures of the layer in a plurality of directions.
(77) An image processing method including:
   decoding a bitstream and generating 3D data including a layer image of a color component and a layer image of an alpha component;
   analyzing layer shape selection information regarding selection of a shape of a layer of the 3D data extracted from the bitstream; and
   rendering the 3D data based on the layer shape selection information and generating a viewpoint image viewed from any viewpoint.
(78) A program for causing a computer to execute processing including:
   decoding a bitstream and generating 3D data including a layer image of a color component and a layer image of an alpha component;
   analyzing layer shape selection information regarding selection of a shape of a layer of the 3D data extracted from the bitstream; and
   rendering the 3D data based on the layer shape selection information and generating a viewpoint image viewed from any viewpoint.

### Reference Signs List

500 Encoding device, 511 Layer image generation unit, 512 Layer image packing unit, 513 SEI generation unit, 514 Encoding unit, 515 Storage unit, 516 Transmission unit, 521 Inter-layer relative information generation unit, 522 Layer allocation information generation unit, 523 Layer shape selection information generation unit, 600 Decoding device, 611 Reception unit, 612 Storage unit, 613 Decoding unit, 614 SEI analysis unit, 615 Layer image unpacking unit, 616 Rendering unit, 617 Output unit, 621 Inter-layer relative information analysis unit, 622 Layer allocation information analysis unit, 623 Layer shape selection information analysis unit, 900 Computer

## Claims

1. An image processing device comprising:
an inter-layer relative information generation unit configured to generate inter-layer relative information regarding a relative relationship between layers of 3D data including a layer image of a color component and a layer image of an alpha component; and
an encoding unit configured to generate a bitstream by encoding the 3D data, and adds the inter-layer relative information to the bitstream.

2. The image processing device according to claim 1, wherein
the inter-layer relative information includes information regarding the relative number of layers of the alpha component with respect to layers of the color component.

3. The image processing device according to claim 1, wherein
the inter-layer relative information includes information regarding a relative resolution of a layer of the alpha component with respect to a layer of the color component.

4. The image processing device according to claim 1, further comprising:
a layer allocation information generation unit configured to generate layer allocation information regarding allocation of the layers of the 3D data,
wherein the encoding unit is configured to add the layer allocation information to the bitstream.

5. The image processing device according to claim 4, wherein
the layer allocation information includes information regarding allocation of some of the layers of the 3D data.

6. The image processing device according to claim 5, wherein
the information regarding the allocation of the some of the layers includes information indicating positions of the some of the layers in a depth direction.

7. The image processing device according to claim 6, wherein
the information regarding the allocation of the some of the layers includes information indicating the number of the some of the layers.

8. The image processing device according to claim 4, wherein
the layer allocation information includes information regarding allocation of the layers of the 3D data based on a non-equal interval allocation function.

9. The image processing device according to claim 8, wherein
the information regarding the allocation based on the non-equal interval allocation function includes information indicating whether or not the layers are allocated based on the non-equal interval allocation function.

10. The image processing device according to claim 9, wherein
the information regarding the allocation based on the non-equal interval allocation function includes information for designating a mode of an allocation method of the layers.

11. The image processing device according to claim 8, wherein
the information regarding the allocation based on the non-equal interval allocation function includes information indicating whether or not an interval between the layers is not explicitly indicated, information indicating whether or not the layers are allocated in a non-linear pattern, and information indicating whether or not the layers are allocated in an inversely proportional pattern.

12. The image processing device according to claim 1, further comprising:
a layer shape selection information generation unit configured to generate layer shape selection information regarding selection of a shape of a layer of the layers of the 3D data,
wherein the encoding unit is configured to add the layer shape selection information to the bitstream.

13. The image processing device according to claim 12, wherein
the layer shape selection information includes curvature designation information for designating a curvature of the layer in a single direction and information indicating whether or not the layer has a cylindrical shape.

14. The image processing device according to claim 12, wherein
the layer shape selection information includes information indicating whether or not the layer is non-planar, curvature designation information for designating a curvature of the layer in a single direction, and information indicating whether or not the layer has a cylindrical shape.

15. The image processing device according to claim 12, wherein
the layer shape selection information includes curvature designation information for designating curvatures of the layer in a plurality of directions.

16. The image processing device according to claim 12, wherein
the layer shape selection information includes information indicating whether or not the layer is non-planar and curvature designation information for designating curvatures of the layer in a plurality of directions.

17. The image processing device according to claim 12, wherein
the layer shape selection information includes information indicating whether or not the layer is non-planar, information indicating whether or not the layer has a cylindrical shape, and curvature designation information for designating curvatures of the layer in a plurality of directions.

18. An image processing method comprising:
generating inter-layer relative information regarding a relative relationship between layers of 3D data including a layer image of a color component and a layer image of an alpha component; and
generating a bitstream by encoding the 3D data, and adding the inter-layer relative information to the bitstream.

19. An image processing device comprising:
a decoding unit configured to decode a bitstream and generate 3D data including a layer image of a color component and a layer image of an alpha component;
an inter-layer relative information analysis unit configured to analyze inter-layer relative information regarding a relative relationship between layers of the 3D data extracted from the bitstream; and
a viewpoint image generation unit configured to render the 3D data based on the inter-layer relative information and generates a viewpoint image viewed from any viewpoint.

20. An image processing method comprising:
decoding a bitstream and generating 3D data including a layer image of a color component and a layer image of an alpha component;
analyzing inter-layer relative information regarding a relative relationship between layers of the 3D data extracted from the bitstream; and
rendering the 3D data based on the inter-layer relative information and generating a viewpoint image viewed from any viewpoint.
